# EUROPÄISCHE PATENTANMELDUNG

(11) **EP 2 168 881 A2**
(43) Veröffentlichungstag der Anmeldung: **31.03.2010**
(21) Anmeldenummer: 09405105.9
(22) Anmeldetag: 27.06.2009
(51) Int. Cl.: B65B 69/00, B65G 69/18

(54) **Verfahren und Vorrichtung zum Umfüllen von Füllgut aus einem ersten Behälter in einen zweiten Behälter**

(30) Priorität: 30.09.2008 CH 15512008
(71) Anmelder: Rubitec AG, 4431 Bennwil (CH)
(72) Erfinder: Rubitschung, Christoph, 4432 Lampenberg (CH)
(74) Vertreter: Ullrich, Gerhard

(57) **Zusammenfassung**

Das Verfahren betrifft das kontaminationsarme Umfüllen von Füllgut aus einem ersten Behälter **(1)** in einen zweiten Behälter **(2).** Der erste Behälter **(1)** hat eine Umhüllung **(14),** welche in einen Auslauf **(10)** mündet, der mit einem ersten Verschluss **(11)** versehen ist. Über den ersten Verschluss **(11)** hinaus erstreckt sich in Fortsetzung der Umhüllung **(14)** ein flexibler Fortsatz **(13).** Zwischen dem ersten Behälter **(1)** und dem zweiten Behälter **(2)** ist eine Abfüllvorrichtung **(3)** angeordnet, welche eine Röhre **(31)** besitzt. Die Röhre **(31)** ist zum Durchfluss des Füllguts **(9)** beim Umfüllen aus dem ersten Behälter **(1)** in den zweiten Behälter **(2)** und auf ihrem Aussenumfang zur Bevorratung einer Folie **(6)** in Form eines Endlosliners bestimmt. Kennzeichnend für das Verfahren ist, dass eine zweite Dichtstelle **(D2)** aus einer Anordnung mit einer aktivierten Sekundärdichtung **(39),** einem über den Aussenumfang der Sekundärdichtung **(39)** geführten flexiblen Fortsatz **(67)** der Folie **(6),** einem im Bereich der Sekundärdichtung **(39)** äusserlich über den flexiblen Fortsatz **(67)** der Folie **(6)** geführten flexiblen Fortsatz **(13)** der Umhüllung **(14)** und einem im Bereich der Sekundärdichtung **(39)** äusserlich über den flexiblen Fortsatz **(13)** aufgebrachten ersten Spannelement **(7)** gebildet wird. Ferner wird eine Vorrichtung zur Durchführung des Verfahrens vorgeschlagen.

## Beschreibung

### Anwendungsgbiet der Erfindung

Die vorliegende Erfindung betrifft ein möglichst kontaminationsarmes Verfahren und eine Vorrichtung zum Umfüllen von Füllgut aus einem ersten Behälter in einen zweiten Behälter. Die Umfüllzyklen werden mit Benutzung einer Folie, vorzugsweise als Endlosliner bevorratet, ausgeführt. Der erste Behälter ist z.B. ein mit einem Granulat oder einem Pulver gefüllter Big Bag, wie vorrangig in der Grosschemie eingesetzt.

### Stand der Technik

Aus der DE 201 05 740 U1 ist eine Anschlussvorrichtung für einen Sack, z.B. zu entleerenden Big Bag bekannt, die im wesentlichen aus einem Auslaufrohr, einer ringförmigen Blähdichtung, einem Stützring und einer Hubeinrichtung besteht. Die Blähdichtung ist auf dem Stützring positioniert, wobei der Stützring mit der Hubeinrichtung verbunden ist. Mittels der Hubeinrichtung lässt sich der Stützring in Erstreckungsrichtung des Auslaufrohrs verfahren. In Ausgangsstellung ist der Stützring mit der nicht aktivierten Blähdichtung oberhalb des Auslaufrohrs gefahren und der verschlossene Sack ist darüber positioniert, so dass sein freies Ende durch den Stützring verläuft und über das Ende des Auslaufrohrs gezogen ist. Anschliessend wird mittels der Hubeinrichtung der Stützring in das Auslaufrohr gefahren, wobei daraufhin die Blähdichtung aktiviert wird und den Sack rundherum gegen das Auslaufrohr drückt, so dass der Sack zwischen Blähdichtung und Auslaufrohr - quasi N-förmig - festgeklemmt ist. Bei geöffnetem Sack strömt dessen Inhalt durch das Auslaufrohr und wird dem Bestimmungsort, z.B. einer Produktionsanlage, zugeführt, die an das Auslaufrohr angrenzt. Zum Entfernen des Sacks wird die Blähdichtung deaktiviert, so dass dessen freies Ende zwischen Auslaufrohr, Blähdichtung und Stützring durchgezogen werden kann, währenddem der Sack nach oben entfernt wird. Nachteilig dabei ist, dass beim Entfernen des Sacks bei deaktivierter Blähdichtung vom offenen freien Ende Partikel aus dem Sack in die Umgebung gelangen können. Ausserdem wird das Material des Sacks beim Einfahren des Stützrings in das Auslaufrohr durch den dabei entstehenden N-förmigen Verlauf - insbesondere an den Aussenkanten - strapaziert und kann im ungünstigsten Fall reissen.

In der WO 2006/117224 A1 ist ein Verfahren und eine Vorrichtung zur staubemissionsarmen Entleerung, insbesondere von Big Bags gezeigt. Der Big Bag wird über einem ersten Andockelement positioniert, das durch eine daran vorhandene erste Klappeneinrichtung verschliessbar ist. Das erste Andockelement besteht aus einem unteren Rahmen, an dem ein Verbindungsstutzen angebracht ist. Ein oberer Rahmen ist gegenüber dem unteren Rahmen entlang der Erstreckungsrichtung des Verbindungsstutzens teleskopisch verstellbar. Zwei Kragarme gehen vom oberen Rahmen ab und tragen an ihrem freien Ende eine erste Abdichtung in Form einer Blähmanschette. Dadurch, dass die Blähmanschette im nicht aktivierten Zustand einen geringeren Durchmesser als der Innendurchmesser des Verbindungsstutzens besitzt, kann die Blähmanschette in den Verbindungsstutzen eingefahren werden. Beabstandet von der Blähmanschette ist am oberen Rahmen eine Ringscheibe vorhanden, die auf ihrer der Blähmanschette zugewandten Stirnseite einen elastischen Belag hat und im nachfolgenden Zusammenschluss mit dem Verbindungsstutzen eine zweite Abdichtung bildet. Die Führung des Auslaufschlauchs, der quasi das freie Ende des Big Bags darstellt, erfolgt durch die Ringscheibe sowie die Blähmanschette und überdeckt dabei teilweise den Verbindungsstutzen. Der obere Rahmen wird dann in den Verbindungsstutzen eingefahren, bis die Ringscheibe mit dem elastischen Belag am Verbindungsstutzen anliegt. Daraufhin wird die Blähmanschette aktiviert. Der Auslaufschlauch ist quasi N-förmig geführt und mittels einer ersten und zweiten Abdichtung am Verbindungsstutzen klemmend gehalten. An die erste Klappeneinrichtung sind dazu komplementäre zweite und dritte Klappeneinrichtungen mit zweiten und dritten Andockelementen fixierbar. Die ersten und zweiten Klappeneinrichtungen dienen dem Steuern des Entleervorgangs, wohingegen die dritte Klappeneinrichtung zur Reinigung des Auslaufschlauchs und des Verbindungsstutzens bestimmt ist. Die ersten und zweiten Klappeneinrichtungen sind so ausgebildet, dass kein Totraum entsteht, in dem sich Staub oder Pulver ansammeln kann, der nach dem Trennen mit den daran befindlichen ersten und zweiten Andockelementen in die Umgebung gelangen kann. Nachteilig dabei ist, dass der Auslaufschlauch, z.B. eine Folie, beim Einfahren der Blähmanschette in den Verbindungsstutzen, speziell an den Aussenkanten der Blähmanschette und des Verbindungsstutzens, stark beansprucht wird. Darüber hinaus ist die Konstruktion durch die Klappeneinrichtungen mit den jeweiligen Andockelementen aufwendig und die Reinigung des Auslaufschlauchs sowie des Verbindungsstutzens zeitintensiv, was hohe Kosten zur Folge hat.

Das in der EP 1 708 941 B1 beschriebene Verfahren dient der kontaminationsvermeidenden Entleerung sowie Befüllung von Füllgut aus einem Behälter mit flexiblem bzw. starrem Auslauf in eine nachgelagerte Einrichtung über ein Anschlussrohr. Auf dem Anschlussrohr ist ein Folienträger montiert, auf dem ein Endlosliner bevorratet ist, so dass Folie für eine Anzahl von Umfüllzyklen zur Verfügung steht. Die Folie wird zwischen dem oberen Rand des Anschlussrohrs und einer daran vorhandenen Axialdichtung hindurchgeführt. Oberhalb des Anschlussrohrs ist die Folie abgebunden, wobei im Anschluss der Abbindung ein trichterförmiges Endstück entsteht. Das Endstück wird in einer Aufnahme mit darin eingebettetem Radialblähring eingelegt und dort mittels einem als Einwegteil ausgebildeten Gegenring mit dem flexiblen Auslaufrand eines über dem Anschlussrohr angeordneten Behälters verklemmt. Die Aktivierung des Radialblährings erfolgt erst dann, wenn der Gegenring eingelegt ist. Dabei verbleibt ein freies Endstück der Folie ausserhalb der Aufnahme und überragt ebenfalls den über die Aufnahme hervorstehenden Teil des flexiblen Auslaufrands vom Behälter, der zu diesem Zeitpunkt noch verschlossen ist. Daraufhin wird die Abbindung an der Folie gelöst und dann der Verschluss am Behälter geöffnet, so dass im Behälter vorhandenes Füllgut durch das Anschlussrohr in die nachgelagerte Einrichtung strömt. Sobald der Behälter entleert ist, wird das freie Endstück der Folie über der Aufnahme zusammengefasst und mit dem flexiblen Auslaufrand des Behälters verbunden, z.B. durch eine Verschnürung. Anschliessend wird Folie nachgezogen, bis diese im sauberen Bereich mittels zweier zueinander beabstandeter Abbindungen verschlossen werden kann. Nachfolgend wird der Radialblähring deaktiviert und die Folie zwischen den soeben erzeugten Abbindungen durchtrennt. Der Behälter kann nun, zusammen mit dem eingeschlossenen Gegenring, kontaminationsfrei entsorgt werden. Aus dem Folienträger wird Folie nachgezogen, bis unterhalb der vorhandenen Abbindung ausreichend Folie für einen neuen Anschlusstrichter zur Verfügung steht. Daraufhin wird die Folie über dem Anschlussrohr erneut abgebunden, und mit Entfernen der oberen Abbindung entsteht wieder ein trichterförmiges Endstück, wie anfangs. Nachteilig dabei ist, dass der Gegenring innerhalb der Aufnahme angeordnet werden muss, wobei das freie Endstück der Folie und der flexible Aussenrand des Behälters zwischen Gegenring und Aufnahme manuell eingefädelt werden müssen, was einige Übung erfordert und zeitintensiv ist. Ausserdem muss die Folie vollständig von Hand nachgezogen werden, was den Arbeitsaufwand erhöht.

### Aufgabe der Erfindung

Angesichts der bisher noch nachteiligen bekannten Verfahren und den dazu entwickelten Vorrichtungen zur Umfüllung von Füllgut aus einem Behälter in einen weiteren Behälter liegt der Erfindung die Aufgabe zugrunde, ein Verfahren mit vereinfachtem Ablauf und eine Vorrichtung zur Durchführung des Verfahrens vorzuschlagen, so dass eine Abfolge von Umfüllzyklen effizienter verläuft. Hierbei ist zu gewährleisten, dass die Umfüllzyklen und das Entsorgen der geleerten Behältnisse möglichst kontaminationsarm erfolgen. Ausserdem soll der Einsatz von Verbrauchsmaterial minimiert werden.

### Übersicht über die Erfindung

Das Verfahren betrifft das kontaminationsarme Umfüllen von Füllgut aus einem ersten Behälter in einen zweiten Behälter. Der erste Behälter hat eine Umhüllung, welche in einen Auslauf mündet, der mit einem ersten Verschluss versehen ist. Über den ersten Verschluss hinaus erstreckt sich in Fortsetzung der Umhüllung ein flexibler Fortsatz. Zwischen dem ersten Behälter und dem zweiten Behälter ist eine Abfüllvorrichtung angeordnet, welche eine Röhre besitzt. Die Röhre ist zum Durchfluss des Füllguts beim Umfüllen aus dem ersten Behälter in den zweiten Behälter und auf ihrem Aussenumfang zur Bevorratung einer Folie in Form eines Endlosliners bestimmt.

Das Verfahren beruht zunächst auf folgenden, den bisherigen Stand der Technik charakterisierenden Schritten:
1. Führen der Folie über eine angrenzend an einen Eintritt in die Röhre liegende erste Dichtstelle hinaus, so dass sich von der Folie ein flexibler Fortsatz erstreckt, der mit einem Überhangabschnitt an einem freien Ende endet;
2. Anbringen eines zweiten Verschlusses oberhalb der ersten Dichtstelle am flexiblen Fortsatz;
3. Zusammenfassen des flexiblen Fortsatzes der Umhüllung und des flexiblen Fortsatzes der Folie an einer zwischen dem ersten Verschluss und dem zweiten Verschluss liegenden zweiten Dichtstelle, zu der eine aktivierbare Sekundärdichtung gehört, mittels eines ersten Spannelements;
4. Lösen des zweiten Verschlusses und des ersten Verschlusses, wodurch das Füllgut aus dem ersten Behälter durch die Röhre in den zweiten Behälter fliesst;
5. Zusammenfassen des Überhangabschnitts mit dem flexiblen Fortsatz der Umhüllung in einem dritten Verschluss oberhalb der zweiten Dichtstelle;
6. Zusammenfassen des flexiblen Fortsatzes der Folie in einem vierten Verschluss zwischen der ersten Dichtstelle und dem dritten Verschluss sowie Lösen zumindest der ersten Dichtstelle;
7. Nachführen von Folie in Richtung des ersten Behälters zur Bildung eines nächsten flexiblen Fortsatzes für einen nächsten Umfüllzyklus;
8. Zusammenfassen der Folie am nächsten flexiblen Fortsatz in einem nächsten zweiten Verschluss; und
9. Durchtrennen des flexiblen Fortsatzes an einer Schnittstelle zwischen dem nächsten zweiten Verschluss und dem vierten Verschluss sowie Entfernen des entleerten ersten Behälters mit dem Anhang bis zur Schnittstelle bei gelöster zweiter Dichtstelle.

Kennzeichnend für das Verfahren ist, dass die zweite Dichtstelle aus einer Anordnung mit der aktivierten Dichtung, dem über den Aussenumfang der Sekundärdichtung geführten flexiblen Fortsatz der Folie, dem im Bereich der Sekundärdichtung äusserlich über den flexiblen Fortsatz der Folie geführten flexiblen Fortsatz der Umhüllung und dem im Bereich der Sekundärdichtung äusserlich über den flexiblen Fortsatz aufgebrachten ersten Spannelement gebildet wird. Nachstehend sind besonders vorteilhafte Details zum Verfahren für das kontaminationsarme Umfüllen angegeben: Die erste Dichtstelle wird aus einer Anordnung mit einer Ringschulter am Eintritt in die Röhre, der über die Ringschulter geführten Folie und einer im Bereich der Ringschulter auf die darüber geführte Folie temporär aufdrückenden Primärdichtung gebildet. Das Aktivieren und Lösen der ersten Dichtstelle erfolgt mittels Hubeinrichtungen, die sich an einer feststehenden unteren Basis abstützen und an einer in der Horizontalebene beweglichen oberen Basis angreifen, welche die Primärdichtung trägt.

Das Nachführen von Folie in Richtung des ersten Behälters zur Bildung eines nächsten flexiblen Fortsatzes für einen nächsten Umfüllzyklus erfolgt bei gelöster erster und zweiter Dichtstelle manuell und/oder mittels einer Zugeinrichtung. Dabei erstrecken sich von der oberen Basis Distanzstreben, die einen im Prinzip hohlen zylindrischen Kragen tragen, an dem die zweite Dichtstelle erzeugbar ist.

An der nachgeführten Folie eines nächsten flexiblen Fortsatzes für einen nächsten Umfüllzyklus wird zwischen dem zweiten Verschluss und dem vierten Verschluss ein Zusatzverschluss angebracht. Die Schnittstelle wird zwischen dem vierten Verschluss und dem Zusatzverschluss ausgeführt.

Der flexible Fortsatz der Folie wird von der ersten Dichtstelle über die zweite Dichtstelle zurück geschlauft an den zweiten Verschluss und dadurch doppelwandig taschenförmig am Kragen herunterhängend geführt. Nach Lösen des Zusatzverschlusses wird das freie Ende des flexiblen Fortsatzes in einem sechsten Verschluss im flexiblen Fortsatz der Umhüllung gefasst, wobei der sechste Verschluss zwischen dem ersten Verschluss und dem Kragen positioniert wird. Anschliessend werden der zweite Verschluss geöffnet und hiernach die zweite Dichtstelle aktiviert. Zur Einleitung des Umfüllvorgangs werden zunächst der sechste Verschluss und dann der erste Verschluss geöffnet.

Alternativ werden an der nachgeführten Folie eines nächsten flexiblen Fortsatzes für einen nächsten Umfüllzyklus zwischen dem zweiten Verschluss und dem vierten Verschluss ein dem zweiten Verschluss zugewandter fünfter Verschluss sowie ein dem vierten Verschluss zugewandter Zusatzverschluss angebracht. Die Schnittstelle wird zwischen dem fünften Verschluss und dem Zusatzverschluss ausgeführt.

Die zweite Dichtstelle wird durch temporäres Aufblähen der am Kragen angeordneten Sekundärdichtung aktiviert. Das an der zweiten Dichtstelle aufgebrachte erste Spannelement wird vor Aktivierung der Sekundärdichtung durch ein äusserlich darum geschlungenes, erneut verwendbares zweites Spannelement gesichert.

Zur Bereitstellung eines rückstandsfreien nächsten flexiblen Fortsatzes für einen nächsten Umfüllzyklus wird die von der Röhre und der Folie unterhalb des vierten Verschlusses umhüllte kontaminierte Luft, welche vom vorherigen Umfüllzyklus stammt, durch eine Spülung beseitigt. Hierzu wird durch einen in die Röhre mündenden zweiten Rohrstutzen ein Gas, vorzugsweise saubere Luft, eingeblasen, das über einen von der Röhre abgehenden ersten Rohrstutzen abfliesst. Das über den ersten Rohrstutzen abgeführte Spülgas wird vorzugsweise abgesaugt.

Die Vorrichtung zur Durchführung des Verfahrens für das kontaminationsarme Umfüllen von Füllgut aus einem ersten Behälter in einen zweiten Behälter, beruht zunächst auf folgenden, den bisherigen Stand der Technik charakterisierenden Anordnungsmerkmalen:
1. Der erste Behälter hat eine Umhüllung, welche in einen Auslauf mündet, der anfänglich mit einem ersten Verschluss versehen, dazu bestimmt ist, beim Umfüllen des Füllguts aus dem ersten Behälter in den zweiten Behälter gelöst zu werden, wobei sich über den ersten Verschluss hinaus, in Fortsetzung der Umhüllung, ein flexibler Fortsatz erstreckt.
2. Zwischen dem ersten Behälter und dem zweiten Behälter ist eine Abfüllvorrichtung angeordnet, welche eine Röhre besitzt.
3. Die Röhre ist zum Durchfluss des Füllguts beim Umfüllen aus dem ersten Behälter in den zweiten Behälter bestimmt und trägt auf ihrem Aussenumfang eine Folie in Form eines Endlosliners.
4. Die Folie ist über eine angrenzend an einen Eintritt in die Röhre liegende, temporär aktivierte erste Dichtstelle bis zu einem temporären zweiten Verschluss geführt.
5. Die Folie erstreckt sich über den zweiten Verschluss hinaus als ein flexibler Fortsatz, der mit einem Überhangabschnitt an einem freien Ende endet.
6. Der zweite Verschluss, welcher am flexiblen Fortsatz liegt, ist dazu bestimmt, beim Umfüllen des Füllguts aus dem ersten Behälter durch die Röhre in den zweiten Behälter gelöst zu werden.
7. Der flexible Fortsatz der Umhüllung und der flexible Fortsatz der Folie sind dazu bestimmt, temporär an einer zwischen dem ersten Verschluss und dem zweiten Verschluss liegenden zweiten Dichtstelle, zu der eine aktivierbare Dichtung gehört, mittels eines ersten Spannelements miteinander gefasst zu werden.
8. Der Überhangabschnitt ist dazu bestimmt, nach dem Umfüllen des Füllguts aus dem ersten Behälter in den zweiten Behälter temporär in einem dritten Verschluss oberhalb der zweiten Dichtstelle zusammengefasst zu werden.
9. Bei gelöster erster Dichtstelle lässt sich Folie in Richtung des ersten Behälters zur Bildung eines nächsten flexiblen Fortsatzes für einen nächsten Umfüllzyklus nachführen, wobei dieser nächste flexible Fortsatz der Folie ferner dazu bestimmt ist, temporär in einem vierten Verschluss zwischen der gelösten ersten Dichtstelle und dem dritten Verschluss zusammengefasst zu werden.
10. Am nächsten flexiblen Fortsatz ist die Folie temporär in einem nächsten zweiten Verschluss zusammengefasst.
11. Eine Schnittstelle ist zwischen dem nächsten zweiten Verschluss und dem vierten Verschluss vorgesehen, welche zum Durchtrennen des flexiblen Fortsatzes bestimmt ist, wonach sich der entleerte erste Behälter mit dem Anhang bis zur Schnittstelle bei gelöster zweiter Dichtstelle entfernen lässt.

Kennzeichnend für die Vorrichtung ist, dass die zweite Dichtstelle aus einer Anordnung mit der aktivierten Dichtung, dem über den Aussenumfang der Sekundärdichtung geführten flexiblen Fortsatz der Folie, dem im Bereich der Sekundärdichtung äusserlich über den flexiblen Fortsatz der Folie geführten flexiblen Fortsatz der Umhüllung und dem im Bereich der Sekundärdichtung äusserlich über den flexiblen Fortsatz aufgebrachten ersten Spannelement besteht.

Nachstehend sind besonders vorteilhafte Details zur Vorrichtung angegeben: Die erste Dichtstelle ist aus einer Anordnung mit einer Ringschulter am Eintritt in die Röhre, der über die Ringschulter geführten Folie und einer im Bereich der Ringschulter auf die darüber geführte Folie temporär aufdrückenden Primärdichtung gebildet. Zum Aktivieren und Lösen der ersten Dichtstelle sind Hubeinrichtungen vorgesehen, die sich an einer feststehenden unteren Basis abstützen und an einer in der Horizontalebene beweglichen oberen Basis angreifen, welche die Primärdichtung trägt.

Zum Nachführen von Folie in Richtung des ersten Behälters zur Bildung eines nächsten flexiblen Fortsatzes für einen nächsten Umfüllzyklus sind bei gelöster erster Dichtstelle und gelöster zweiter Dichtstelle die Hubeinrichtungen ausgefahren, wobei sich Folie manuell und/oder mittels einer Zugeinrichtung nachführen lässt. Von der oberen Basis erstrecken sich Distanzstreben, die einen im Prinzip hohlen zylindrischen Kragen tragen, an dem sich die zweite Dichtstelle bilden lässt.

An der nachgeführten Folie eines nächsten flexiblen Fortsatzes für einen nächsten Umfüllzyklus ist zwischen dem zweiten Verschluss und dem vierten Verschluss ein Zusatzverschluss angebracht. Die Schnittstelle ist zwischen dem vierten Verschluss und dem Zusatzverschluss vorgesehen.

Der flexible Fortsatz der Folie ist von der ersten Dichtstelle über die zweite Dichtstelle zurück geschlauft an den zweiten Verschluss und dadurch doppelwandig taschenförmig am Kragen herunterhängend geführt. Nach Lösen des Zusatzverschlusses ist das freie Ende des flexiblen Fortsatzes in einem sechsten Verschluss im flexiblen Fortsatz der Umhüllung gefasst, wobei der sechste Verschluss zwischen dem ersten Verschluss und dem Kragen vorgesehen ist. Anschliessend sind der zweite Verschluss geöffnet und hiernach die zweite Dichtstelle aktiviert. Bei Einleitung des Umfüllvorgangs ist zunächst der sechste Verschluss und dann der erste Verschluss geöffnet.

An der nachgeführten Folie eines nächsten flexiblen Fortsatzes für einen nächsten Umfüllzyklus sind zwischen dem zweiten Verschluss und dem vierten Verschluss ein dem zweiten Verschluss zugewandter fünfter Verschluss sowie ein dem vierten Verschluss zugewandter Zusatzverschluss angebracht. Die Schnittstelle ist zwischen dem fünften Verschluss und dem Zusatzverschluss vorgesehen.

Die zweite Dichtstelle lässt sich durch temporäres Aufblähen der am Kragen angeordneten Sekundärdichtung aktivieren. Das an der zweiten Dichtstelle aufgebrachte erste Spannelement ist vor Aktivierung der Sekundärdichtung durch ein äusserlich darum geschlungenes, erneut verwendbares zweites Spannelement gesichert.

Ein in die Röhre mündender zweiter Rohrstutzen ist zum Einblasen eines Spülgases, vorzugsweise saubere Luft, vorgesehen, und von der Röhre geht ein erster Rohrstutzen zum Ableiten des Spülgases ab. Damit lässt sich die von der Röhre und der Folie unterhalb des vierten Verschlusses umhüllte kontaminierte Luft, welche vom vorherigen Umfüllzyklus stammt, beseitigen, so dass ein rückstandsfreier nächster flexibler Fortsatz für einen nächsten Umfüllzyklus zur Verfügung steht.

### Kurzbeschreibung der beigefügten Zeichnungen

Es zeigen:
- Figur 1:: eine Abfüllvorrichtung in einer *ersten Variante,* mit einem in Position gebrachten, zu entleerenden ersten Behälter und einem bereitgestell- ten leeren zweiten Behälter, in einen Umfüllzyklus gemäss einer *ersten Verfahrensvariante* startender erster Situation, als Prinzipdarstellung;
- Figur 2:: die Abfüllvorrichtung gemäss Figur 1, in zweiter Situation;
- Figur 3:: die Abfüllvorrichtung gemäss Figur 2, in anschliessender dritter Situa- tion;
- Figur 4:: die Abfüllvorrichtung gemäss Figur 3, in nächster vierter Situation;
- Figur 5:: die Abfüllvorrichtung gemäss Figur 4, in fortgesetzter fünfter Situation;
- Figur 6:: die Abfüllvorrichtung gemäss Figur 5, in nachfolgender sechster Situa- tion;
- Figur 7:: die Abfüllvorrichtung gemäss Figur 6, in weiterer siebenter Situation;
- Figur 8:: die Abfüllvorrichtung gemäss Figur 7, in achter Situation;
- Figur 9:: die Abfüllvorrichtung gemäss Figur 8, in abschliessender neunter Situation;
- Figur 10:: die Abfüllvorrichtung in einer *zweiten Variante,* mit einem in Position gebrachten, zu entleerenden ersten Behälter und einem bereitgestell- ten leeren zweiten Behälter, in einen Umfüllzyklus gemäss einer *zwei- ten Verfahrensvariante* startender erster Situation, als Prinzipdarstel- lung;
- Figur 11:: die Abfüllvorrichtung gemäss Figur 10, in anschliessender zweiter Situation;
- Figur 12:: die Abfüllvorrichtung gemäss Figur 11, in dritter Situation;
- Figur 13:: die Abfüllvorrichtung gemäss Figur 12, in vierter Situation;
- Figur 14:: die Abfüllvorrichtung gemäss Figur 13, in nächster fünfter Situation;
- Figur 15:: die Abfüllvorrichtung gemäss Figur 14, in sechster Situation;
- Figur 16:: die Abfüllvorrichtung gemäss Figur 15, in siebenter Situation;
- Figur 17:: die Abfüllvorrichtung gemäss Figur 16, in achter Situation;
- Figur 18:: die Abfüllvorrichtung gemäss Figur 17, in fortgesetzter neunter Situa- tion;
- Figur 19:: die Abfüllvorrichtung gemäss Figur 18, in nachfolgender zehnter Situa- tion;
- Figur 20:: die Abfüllvorrichtung gemäss Figur 19, in weiterer elfter Situation;
- Figur 21:: die Abfüllvorrichtung gemäss Figur 20, in zwölfter Situation; und
- Figur 22:: die Abfüllvorrichtung gemäss Figur 21, in abschliessender dreizehnter Situation.

### Ausführungsbeispiele

Mit Bezug auf die beiliegenden Zeichnungen erfolgt nachstehend die detaillierte Beschreibung des Verfahrensablaufs in einer *ersten* und einer *zweiten Variante* mit dem jeweils zugehörigen apparativen Aufbau der erfindungsgemässen Abfüllvorrichtung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

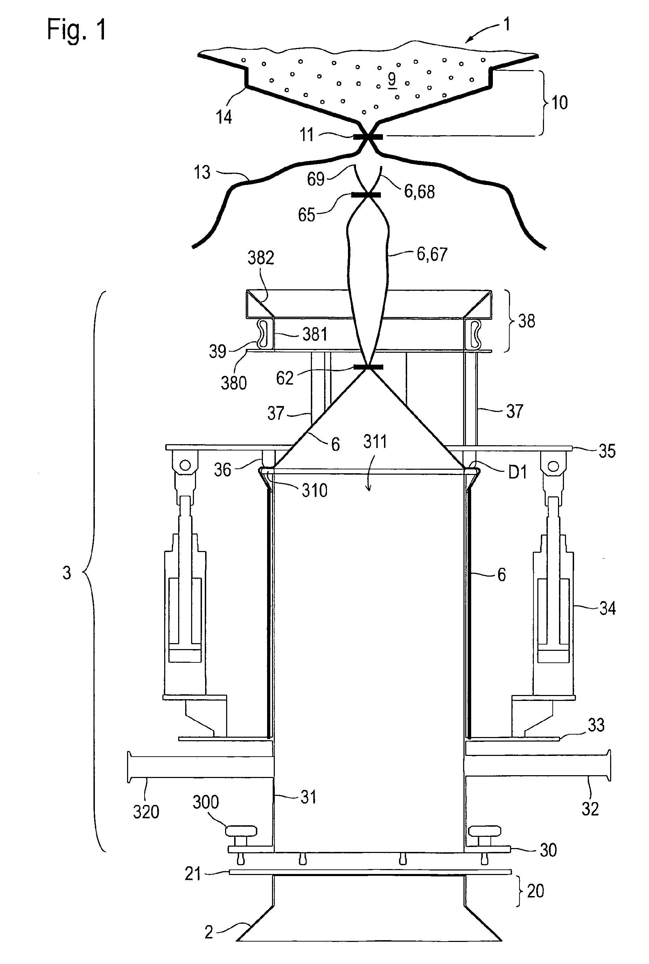

### Figur 1: Erste Situation

Anhand der Figurenfolge mit den Figuren 1 bis **9** wird die Durchführung einer *ersten Verfahrensvariante* beschrieben. Zweck der Abfüllvorrichtung **3** der hier gezeigten *ersten Variante* ist, Füllgut **9** aus einem ersten Behälter **1**, der oberhalb der Abfüllvorrichtung **3** positioniert ist, mittels dieser in einen zweiten Behälter **2** umzufüllen, der unterhalb der Abfüllvorrichtung **3** steht. Der erste Behälter **1**, der z.B. die Gestalt eines Big Bags hat, wird von einer flexiblen Umhüllung **14** gebildet, die zu einem am unteren Ende gelegenen Auslauf **10** führt, welcher mit einem ersten Verschluss **11** verschlossen ist. Die Umhüllung **14** erstreckt sich als flexibler Fortsatz **13** über den Verschluss **11** hinaus. Der zweite Behälter **2** hat die Funktion eines stationären Silos oder eines Transportbehälters mit einem vorzugsweise mehrfachen Fassungsvermögen des ersten Behälters **1**. Am zweiten Behälter **2** ist am oberen Ende ein Einlauf **20** vorgesehen, an dessen freien Ende ein Behälterflansch **21** angrenzt. Zur Entnahme des in den zweiten Behälter **2** einzubringenden Füllguts **9** kann der Einlauf **20** - z.B. mittels Abpumpen - oder ein nicht gezeigter Auslauf benutzt werden.

Die Abfüllvorrichtung **3** hat eine aufrecht stehende zylinderförmige Röhre **31**, die unten an einem runden Anschlussflansch **30** und oben an einer Ringschulter **310** endet. Oberhalb des Anschlussflansches **30** wird die Röhre **31** von einer rund umlaufenden unteren Basis **33** umgeben. Oberhalb der Ringschulter **310** ist eine kreisringförmige obere Basis **35** vorhanden, deren zentrisch positionierte Ausnehmung konzentrisch zum Eintritt **311** in die Röhre **31** liegt. Der Anschlussflansch **30**, die untere Basis **33** und die obere Basis **35** erstrecken sich in horizontalen Ebenen. Zwischen dem Anschlussflansch **30** und der unteren Basis **33** geht von der Röhre **31** ein erster Rohrstutzen **32** nach aussen ab, der z.B. zur Reinigung der Röhre **31** dient. Ferner mündet in die Röhre **31** ein zweiter Rohrstutzen **320**, der für eine Spülung nutzbar ist. Am Anschlussflansch **30** sind Verbindungsorgane **300** vorhanden, die zum Eingriff mit am Behälterflansch **21** komplementären Konturen bestimmt sind. Die Verbindung zwischen Abfüllvorrichtung **3** und zweitem Behälter **2** lässt sich somit lösen. Gegenwärtig ist die Abfüllvorrichtung **3** vom zweiten Behälter **2** getrennt.

Die untere Basis **33** stützt zwei synchron betriebene Hubeinrichtungen **34**, jeweils mit einem Zylinder und darin verschiebbar gelagertem Kolben. Der Zylinder ist mit der unteren Basis **33** verbunden und das freie Ende des Kolbens mit der oberen Basis **35**. Die beiden Hubeinrichtungen **34** stehen radial zur Röhre 31 und diametral einander gegenüber. An der Unterseite der oberen Basis **35** ist eine ringförmige Primärdichtung **36** vorhanden, die bei abgesenkten Hubeinrichtungen **34** auf der Ringschulter **310** aufsetzt und damit die vom Aussenumfang der Röhre **31** über die Ringschulter **310** geführte Folie **6** einklemmt, so dass eine erste ringförmige Dichtstelle **D1** entsteht. Die Folie **6** ist zwischen der unteren Basis **33** und der Schulter **310** auf der Röhre **31** in Form eines Endlosliners bevorratet.

Von der Oberseite der oberen Basis **35** gehen Distanzstreben **37** ab, welche einen in der Horizontalen liegenden kreisringförmigen Boden **380** eines Kragens **38** tragen. Die zentrische Öffnung im Boden **380** fluchtet zur zentrischen Öffnung in der oberen Basis **35** und zum Eintritt **311** der Röhre **31**. Die Öffnung im Boden **380** erstreckt sich in den im Prinzip zylinderförmigen Kragen **38** hinein und mündet oben mit einer sich nach aussen aufweitenden Trichterkontur **382**. Zwischen dem Boden **380** und der Trichterkontur **382** liegt eine radiale, sich nach aussen öffnende Nut, die einen Sitz **381** zur Aufnahme einer - hier nicht aktivierten - Dichtung **39** bildet. Die eingesetzte Sekundärdichtung **39** ist vorzugsweise eine Blähdichtung.

Es wird eine Ausgangssituation angenommen, der ein kompletter Umfüllzyklus voranging. Damit erstreckt sich Folie **6** vom vorherigen Umfüllzyklus über die erste Dichtstelle **D**1 hinaus zu einem noch verbliebenen zweiten Verschluss **62** und von hier weiter als flexibler Fortsatz **67** bis zu einem freien Ende **69,** dem ein Überhangabschnitt **68** vorangeht. Im Anschluss an die erste Dichtstelle **D1** verläuft die Folie **6** durch die Ausnehmung in der oberen Basis **35** sowie die Ausnehmung im Kragen **38**, wobei der Überhangabschnitt **68** mit seinem freien Ende **69** über den Kragen **38** hinaus ragt. Der flexible Fortsatz **13** des ersten Behälters **1** übergreift den flexiblen Fortsatz **67** der Folie **6**. Der erste Verschluss **11** am ersten Behälter **1** verhindert das Ausströmen von Füllgut **9**. Die Darstellung soll die prinzipiellen Längenverhältnisse veranschaulichen; in der Praxis würde der flexible Fortsatz **67** mit dem zweiten Verschluss **62** und die sich bis zur ersten Dichtstelle **D1** erstreckende Folienlänge **6** in sich zusammenfallen.

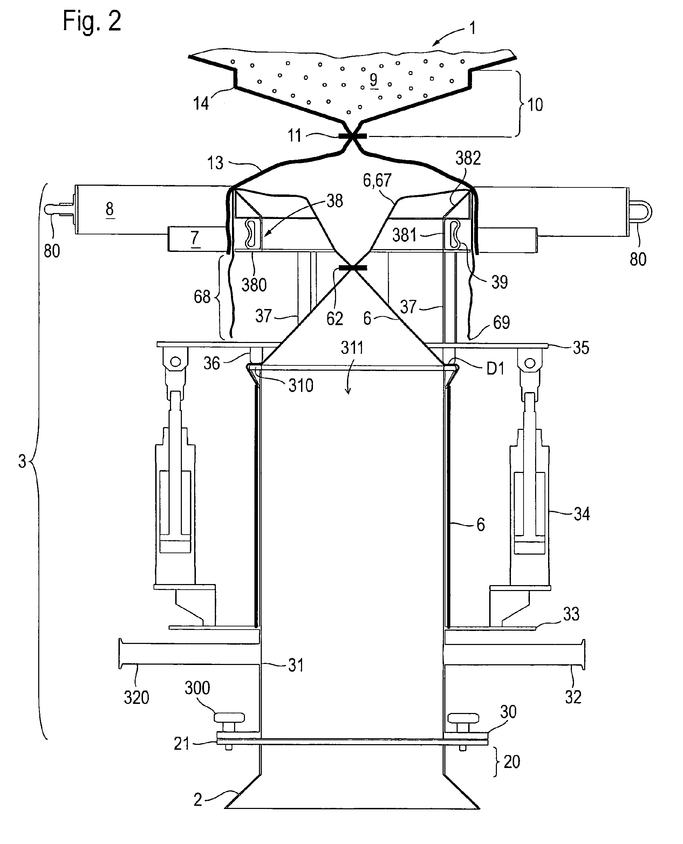

Beim erstmaligen Umfüllzyklus wird noch kein zweiter Verschluss **62** vorhanden sein, da solche erst von einem vorangehenden Umfüllzyklus zurückgeblieben wären. Der weitere Ablauf des Umfüllzyklus des möglichst kontaminationsarmen Umfüllens von Füllgut **9** aus dem ersten Behälter **1** in den zweiten Behälter **2** wird anhand der nachfolgenden Figuren **2** bis **9** erläutert.

Zusätzlich kann dem freien Ende **69** zurückversetzt, am flexiblen Fortsatz **67** der Folie **6** ein fünfter Verschluss **65** angebracht werden, der jedoch beim erstmaligen Umfüllzyklus ebenso fehlt wie der zweite Verschluss **62**.

### Figur 2: Zweite Situation

Die Folie **6** ist mit ihrem flexiblen Fortsatz **67** äusserlich über den Kragen 38 abwärts gezogen, so dass ein Teil des flexiblen Fortsatzes **67** innerhalb und der dem Ende **69** zugewandte Teil des flexiblen Fortsatzes **67**, nämlich der Überhangabschnitt **68**, ausserhalb des Kragens **38** über den Boden **380** hinaus zur oberen Basis **35** herabhängt. Von der Umhüllung **14** des ersten Behälters **1** ist der flexible Fortsatz **13** äusserlich über den Kragen **38** geschlagen und umschliesst dabei den flexiblen Fortsatz **67** der Folie **6** im Bereich des Kragens **38**. Die Sekundärdichtung **39** bleibt weiterhin unaktiviert, und ein offenes erstes Spannelement **7** sowie ein offenes zweites Spannelement **8** mit seinen Verschlussorganen **80** werden bereitgestellt. Das erste Spannelement **7** kann als Verbrauchsmaterial z.B. eine Bride, ein Binder oder ein Band sein. Das zweite Spannelement **8** ist erneut für einen nächsten Umfüllzyklus verwendbar. Die Flansche **21,30** sind miteinander verbunden, so dass der zweite Behälter **2** mit seinem Einlauf **20** voran an die Röhre **31** angedockt ist.

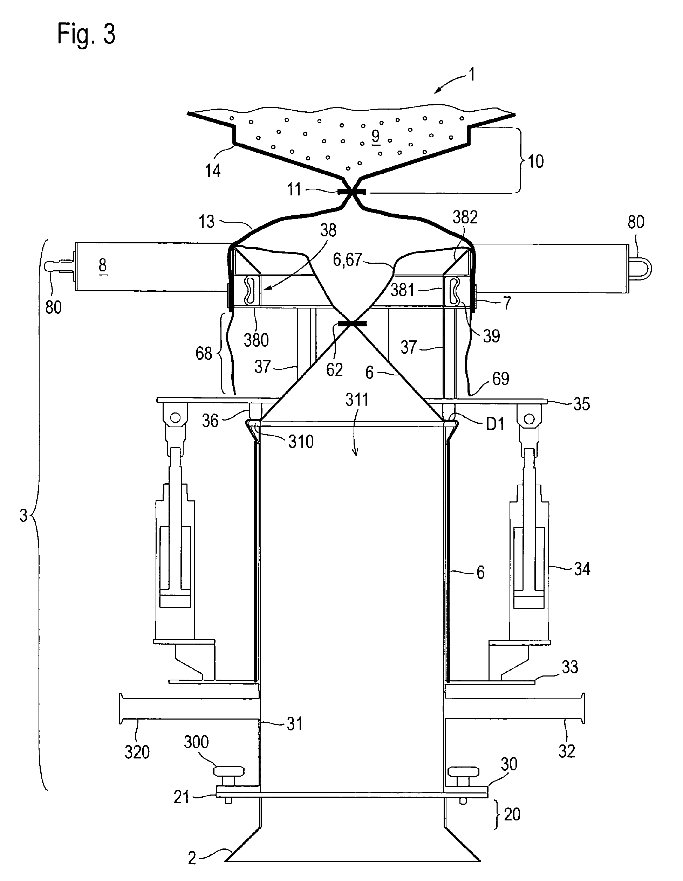

### Figur 3: Dritte Situation

Um die Anordnung aus Sekundärdichtung **39,** daran anliegendem flexiblen Fortsatz **67** der Folie **6** und daran anliegendem flexiblen Fortsatz **13** des ersten Behälters **1** ist das erste Spannelement **7** angelegt und verspannt. Das zweite Spannelement **8** ist noch unverschlossen und liegt zur Montage in der nächsten Situation bereit.

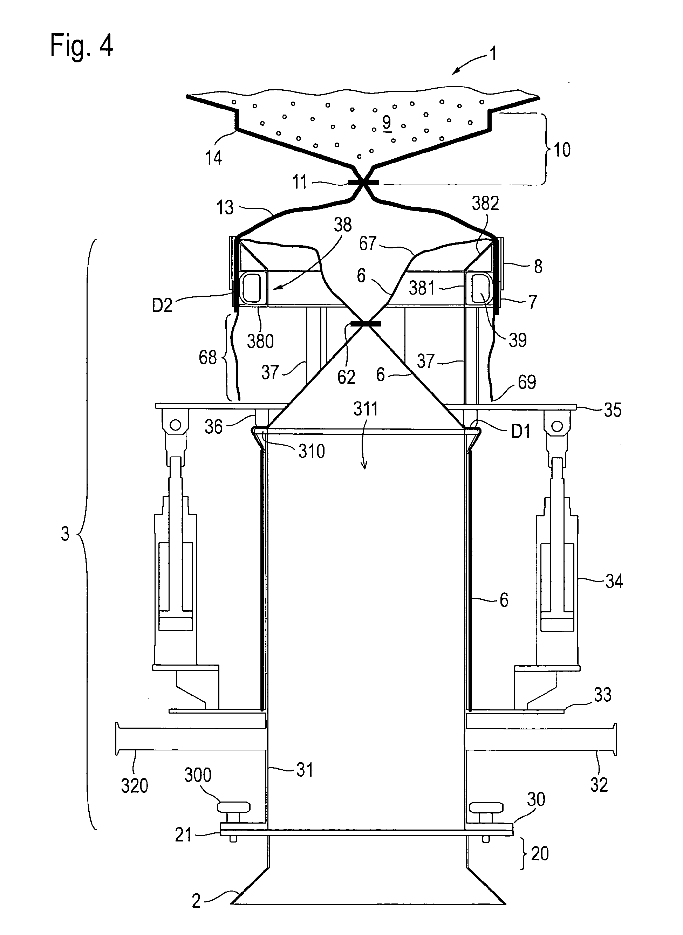

### Figur 4: Vierte Situation

Die vorher erzeugte Anordnung aus Sekundärdichtung **39**, flexiblem Fortsatz **67** der Folie **6**, flexiblem Fortsatz **13** des ersten Behälters **1** und erstem Spannelement **7** ist von dem nun angelegten zweiten Spannelement **8** umschlossen, wobei die Verschlussorgane **80** ineinander greifen. Ferner ist die Sekundärdichtung **39** nun aktiviert. Es entsteht die Dichtstelle **D2**, die flexiblen Fortsätze **13,67** werden fixiert und das erste Spannelement **7** sowie die zweite Dichtstelle **D2** sind gesichert.

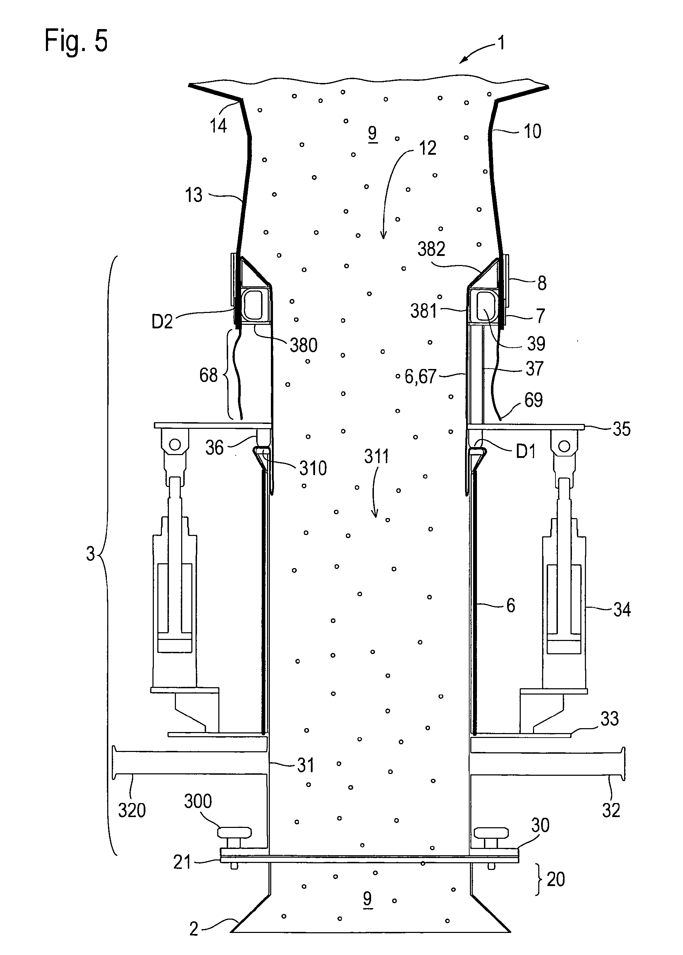

### Figur 5: Fünfte Situation

Zur Freigabe des Strömungsweges **12** aus dem ersten Behälter **1** durch den Kragen **38**, die Röhre **31** in den Einlauf **20** zum zweiten Behälter **2** sind zunächst der zweite Verschluss **62** und dann der erste Verschluss **11** am ersten Behälter **1** entfernt worden. Um an den zweiten Verschluss **62** zu gelangen, wird man unter den herunterhängenden Überhangabschnitt **68** der Folie **6** und zwischen den Distanzstreben **37** hindurch greifen. Infolge der geöffneten Verschlüsse **11,62** und der Schwerkraft des Füllguts **9** fliesst dieses vom ersten Behälter **1** in den zweiten Behälter **2**, bis der erste Behälter **1** völlig leer ist. Die Trichterkontur **382** am Kragen **38** begünstigt dabei den Eintritt des Füllguts **9** vom Strömungsweg **12** in den Bereich des Kragens **38**. Der flexible Fortsatz **67** und die Folie **6** werden aufgrund des die Abfüllvorrichtung **3** durchströmenden Füllguts **9** an die Innenwandung vom Kragen **38** und der Röhre **31** gedrückt. Das zweite Spannelement **8** sichert die zweite Dichtstelle **D2** gegen den Strömungsdruck des abwärts fliessenden Füllguts **9.** Unterhalb der Schulter **310** bildet sich durch den nun gelösten zweiten Verschluss **62** und den damit entstandenen Materialüberhang an Folie **6** eine Art Tasche innerhalb der Röhre 31.

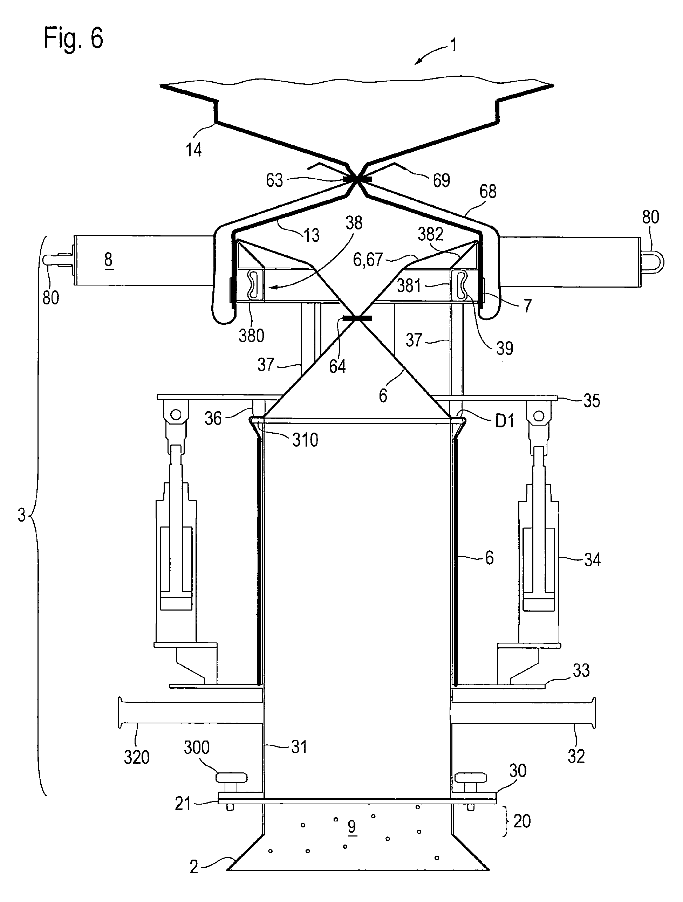

### Figur 6: Sechste Situation

Zwischen der ersten Dichtstelle **D1** und der zweiten Dichtstelle **D2** wird an der Folie **6** ein vierter Verschluss **64** angebracht, indem man durch die Freiräume zwischen den Distanzstreben **37** greift. Bei gelöstem, später wieder verwendbarem zweiten Spannelement **8** wird der Überhangabschnitt **68** der Folie **6** mit seinem freien Ende **69** nach oben über den Kragen **38** gestülpt und ein Bündel aus Überhangabschnitt **68** und flexiblem Fortsatz **13** des ersten Behälters **1** gebildet. An diesem Bündel wird ein dritter Verschluss **63** erzeugt. Dabei überragt das freie Ende **69** den dritten Verschluss **63**. Im Anschluss daran wird die Sekundärdichtung **39** deaktiviert und somit die Dichtstelle **D2** aufgelöst.

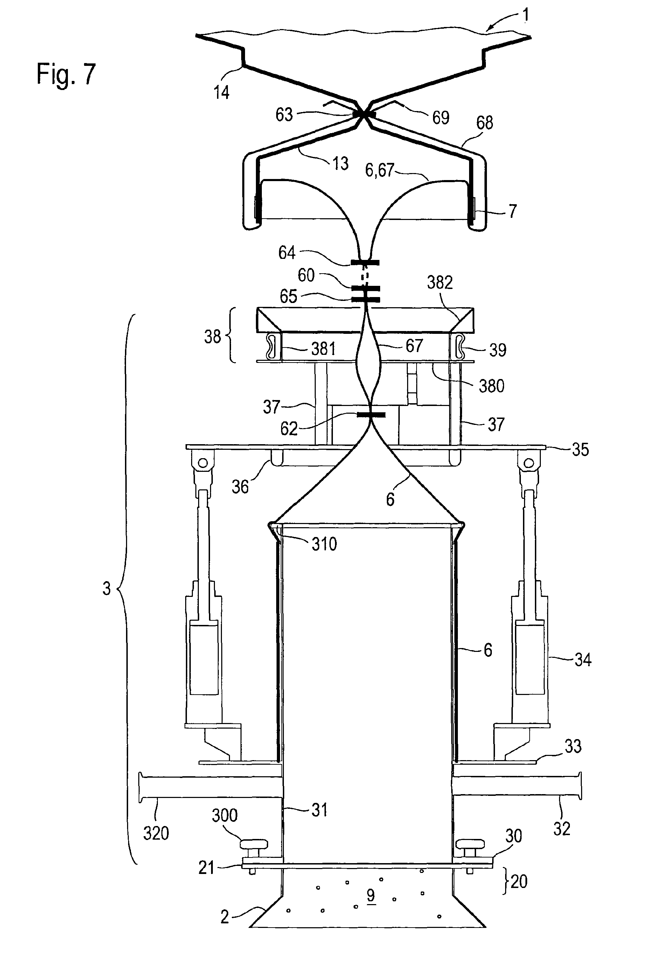

### Figur 7: Siebente Situation

Beim Aufwärtsfahren der Hubeinrichtungen **34** entfernt sich die von der oberen Basis **35** getragene Primärdichtung **36** von der Schulter **310,** so dass die erste Dichtstelle **D1** aufgelöst wird. Benötigt man eine grössere Länge an Folie **6**, erfolgt weiteres Nachziehen manuell und/oder mittels einer nicht dargestellten Zugvorrichtung bei bereits deaktivierter Sekundärdichtung **39**. Im Anschluss an das Nachziehen kann an der Folie **6** zwischen dem fünften Verschluss **65** und dem vierten Verschluss **64** ein optionaler Zusatzverschluss **60** angebracht werden. Die Verschlüsse **65,60** werden vorzugsweise zwischen dem oberen Abschluss des Kragens **38** und dem vierten Verschluss 64 angebracht.

Bei grosszügig nachgezogener Folie **6** ist sichergestellt, dass für den nächsten Umfüllzyklus nicht kontaminierte Folie **6** ansteht. Durch den vorhandenen dritten und vierten Verschluss **63,64** bleibt das erste Spannelement **7** innerhalb des zu entsorgenden Folienabschnitts **6**. Die Folie **6** wird auf Höhe der oberen Basis **35** mit einem zweiten Verschluss **62** abgebunden.

Alternativ kann man bei sparsamerer Verwendung von Folie **6** zur Bereitstellung eines rückstandsfreien nächsten flexiblen Fortsatzes **67** für einen nächsten Umfüllzyklus die von der Röhre **31** und der Folie **6** unterhalb des vierten Verschlusses **64** umhüllte kontaminierte Luft, welche vom vorherigen Umfüllzyklus stammt, durch eine Spülung beseitigen. Hierzu wird durch den in die Röhre **31** mündenden zweiten Rohrstutzen **320** ein Gas, vorzugsweise saubere Luft, eingeblasen, das über den von der Röhre **31** abgehenden ersten Rohrstutzen **32** abfliesst, vorzugsweise durch Absaugen gefördert.

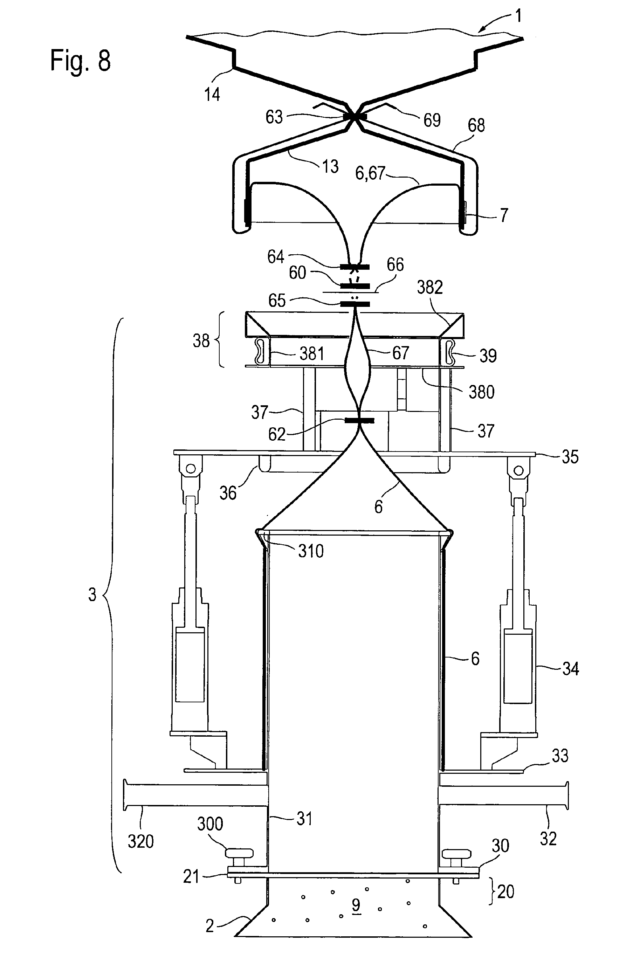

### Figur 8: Achte Situation

Die Folie **6** wird zwischen dem Zusatzverschluss **60** und dem fünften Verschluss 65 an einer Schnittstelle **66** durchtrennt, so dass ein neuer flexibler Fortsatz **67** für den nächsten Umfüllzyklus zur Verfügung steht. Am neuen flexiblen Fortsatz **67** der Folie **6** befindet sich der fünfte Verschluss **65,** von dem sich der Überhangabschnitt **68** erstreckt, welcher mit dem freien Ende **69** abschliesst. Der entleerte erste Behälter **1** mit der Umhüllung **14,** dem Auslauf **10** und dem Fortsatz **13**, der am dritten Verschluss **63** mit dem Überhangabschnitt **68** des mit den Verschlüssen **64,60** abgetrennten flexiblen Fortsatzes **67** gebündelt ist und das erste Spannelement **7** umschliesst, kann entsorgt werden.

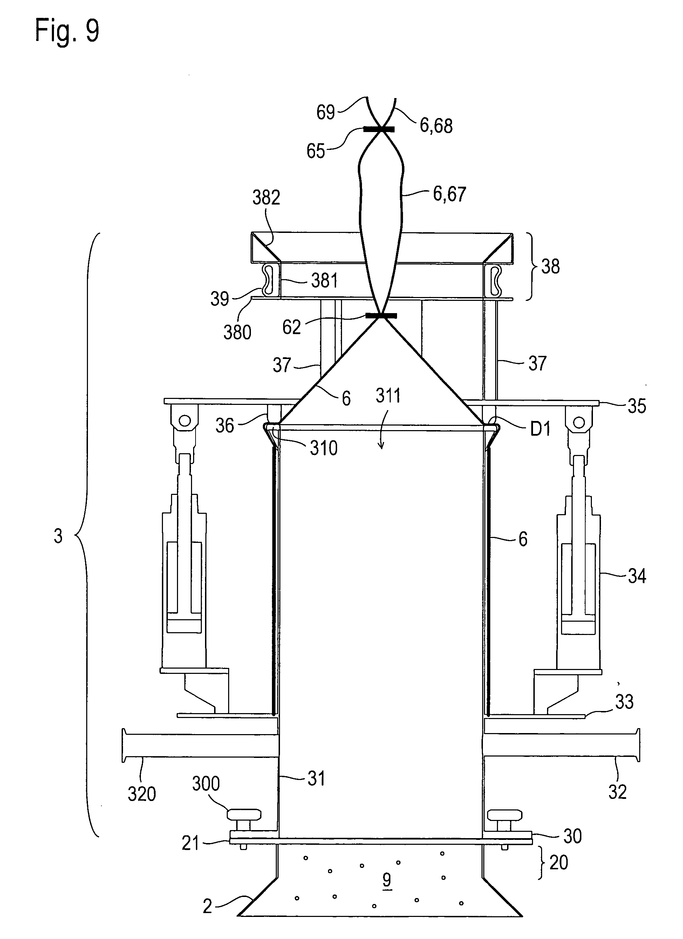

### Figur 9: Neunte Situation

Nach Abwärtsbewegung sind die Hubeinrichtungen **34** eingefahren, so dass die obere Basis **35** mit der Primärdichtung **36** erneut auf der Schulter **310** aufliegt und die erste Dichtstelle **D1** wieder erzeugt ist. Die Folie **6** verläuft gemäss der ersten Situation und ist somit für den nächsten Umfüllzyklus bereitgestellt. Je nach Konzeption der Gesamtanlage könnte der zweite Behälter **2** von der Abfüllvorrichtung **3** abgedockt werden, um den zweiten Behälter **2** zu entleeren oder durch einen neuen, leeren zweiten Behälter **2** zu ersetzen.

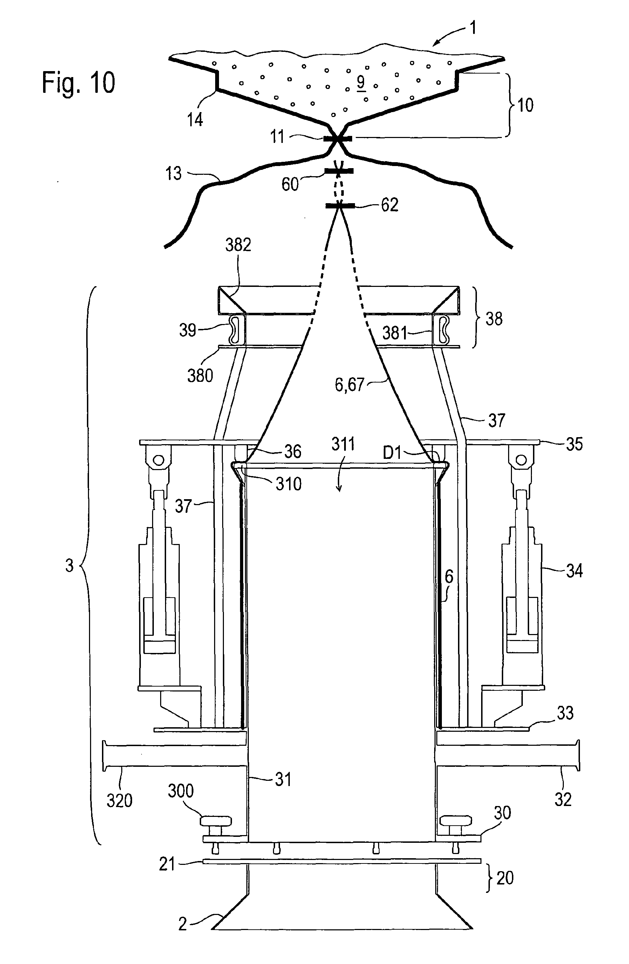

### Figur 10: Erste Situation

Anhand der Figurenfolge mit den Figuren **10** bis **22** wird die Durchführung einer *zweiten Verfahrensvariante* beschrieben, welche sich jedoch auch an der Abfüllvorrichtung **3** in der *ersten Variante* gemäss den Figuren **1** bis **9** durchführen lässt.

Zweck der Abfüllvorrichtung **3** der nun gezeigten *zweiten Variante* ist wiederum, Füllgut **9** aus einem ersten Behälter **1**, der oberhalb einer Abfüllvorrichtung **3** positioniert ist, mittels dieser in einen zweiten Behälter **2** umzufüllen, der unterhalb der Abfüllvorrichtung **3** steht. Der apparative Aufbau der Abfüllvorrichtung **3** entspricht insoweit der Figur **1**, jedoch gehen die Distanzstreben **37** nun von der Oberseite der unteren Basis **33** ab, welche den in der Horizontalen liegenden kreisringförmigen Boden **380** des Kragens **38** tragen.

Es wird eine Ausgangssituation angenommen, der ein kompletter Umfüllzyklus voranging. Damit erstreckt sich Folie **6** als flexibler Fortsatz **67** vom vorherigen Umfüllzyklus über die erste Dichtstelle **D1** hinaus zu einem noch verbliebenen zweiten Verschluss **62** und von hier weiter bis zu einem optionalen Zusatzverschluss **60.** Im Anschluss an die erste Dichtstelle **D1** verläuft die Folie **6** durch die Ausnehmung in der oberen Basis 35 sowie die Ausnehmung im Kragen **38**. Der zweite Verschluss **62** und der Zusatzverschluss **60** ragen über den Kragen **38** hinaus. Der flexible Fortsatz **13** des ersten Behälters **1** übergreift den flexiblen Fortsatz **67** der Folie **6**. Der erste Verschluss **11** am ersten Behälter **1** verhindert das Ausströmen von Füllgut **9**. Die Darstellung soll die prinzipiellen Längenverhältnisse veranschaulichen, wobei die gestrichelten Linien mehr Folienlänge **6** andeuten sollen als gezeigt; in der Praxis würde der flexible Fortsatz **67** der Folie **6** mit dem zweiten Verschluss **62** und dem Zusatzverschluss **60** in sich zusammenfallen.

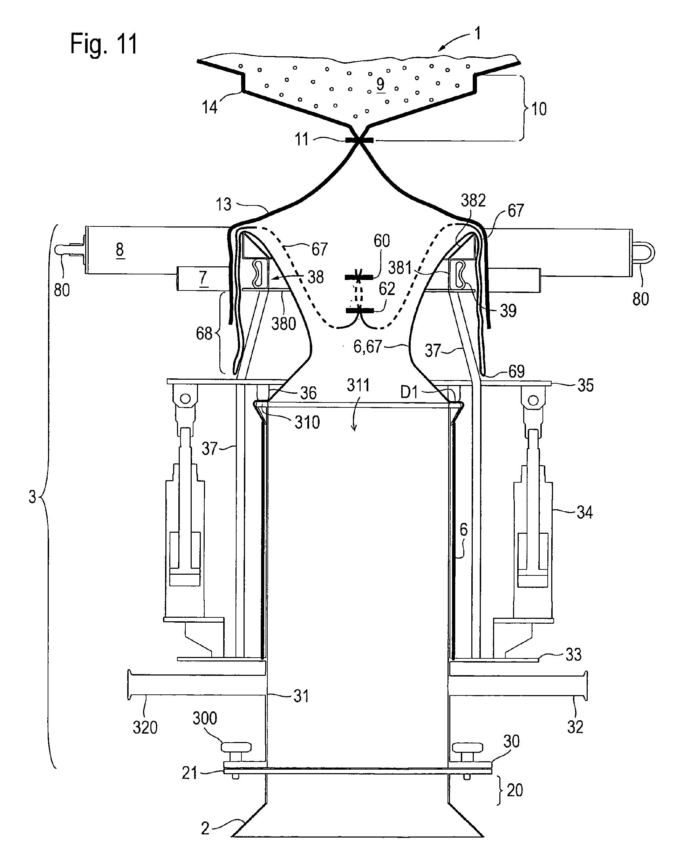

Beim erstmaligen Umfüllzyklus wäre noch kein zweiter Verschluss **62** bzw. Zusatzverschluss **60** vorhanden, da solche erst von einem vorangehenden Umfüllzyklus zurückgeblieben wären. Der weitere Ablauf des Umfüllzyklusses des möglichst kontaminationsarmen Umfüllens von Füllgut **9** aus dem ersten Behälter **1** in den zweiten Behälter **2** wird anhand der nachfolgenden Figuren **11** bis 22 erläutert.

### Figur 11: Zweite Situation

Die Folie **6** ist mit ihrem flexiblen Fortsatz 67 äusserlich über den Kragen **38** abwärts gezogen, so dass ein Teil des flexiblen Fortsatzes **67** innerhalb und der dem Ende **69** zugewandte Teil des flexiblen Fortsatzes **67**, nämlich der Überhangabschnitt **68**, ausserhalb des Kragens **38** über den Boden **380** hinaus zur oberen Basis 35 herabhängt. Dabei verläuft die Folie **6** doppelt, so dass innerhalb und ausserhalb des Kragens **38** zwischen den Folienbahnen **6** ein Zwischenraum eingeschlossen wird. Von der Umhüllung **14** des ersten Behälters **1** ist der flexible Fortsatz **13** äusserlich über den Kragen **38** geschlagen und umschliesst dabei den flexiblen Fortsatz **67** der Folie **6** im Bereich des Kragens **38**. Die Sekundärdichtung **39** bleibt weiterhin unaktiviert und ein offenes erstes Spannelement **7** sowie ein offenes zweites Spannelement **8** mit seinen Verschlussorganen **80** werden bereitgestellt. Das erste Spannelement **7** kann als Verbrauchsmaterial, z.B. eine Bride, ein Binder oder ein Band sein. Das zweite Spannelement **8** ist erneut für einen nächsten Umfüllzyklus verwendbar. Die Flansche **21,30** sind miteinander verbunden, so dass der zweite Behälter **2** mit seinem Einlauf **20** voran an die Röhre **31** angedockt ist.

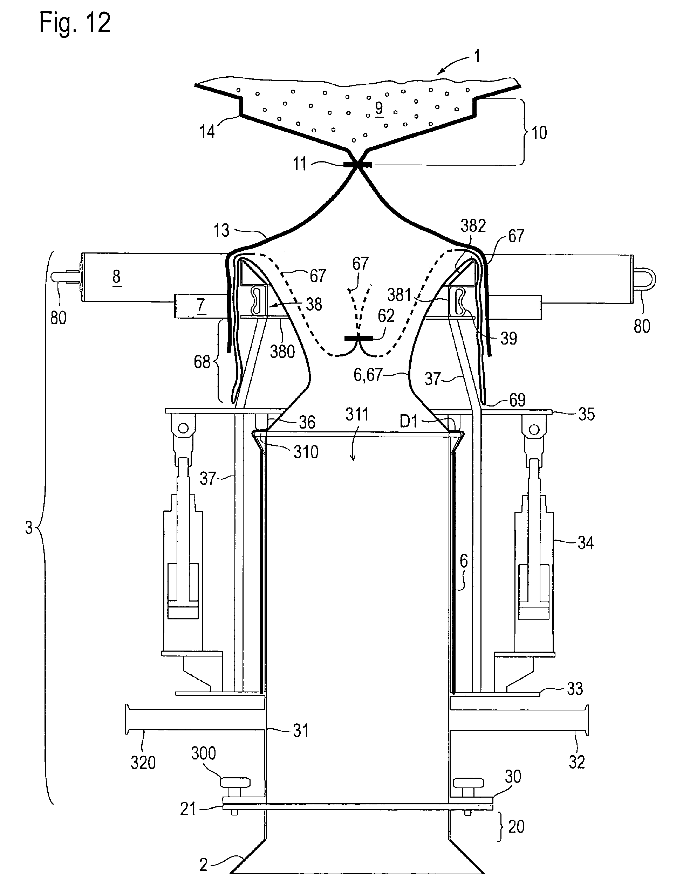

### Figur 12: Dritte Situation

Sofern der Zusatzverschluss **60** am flexiblen Fortsatz **67** der Folie **6** vorhanden ist, wird dieser entfernt.

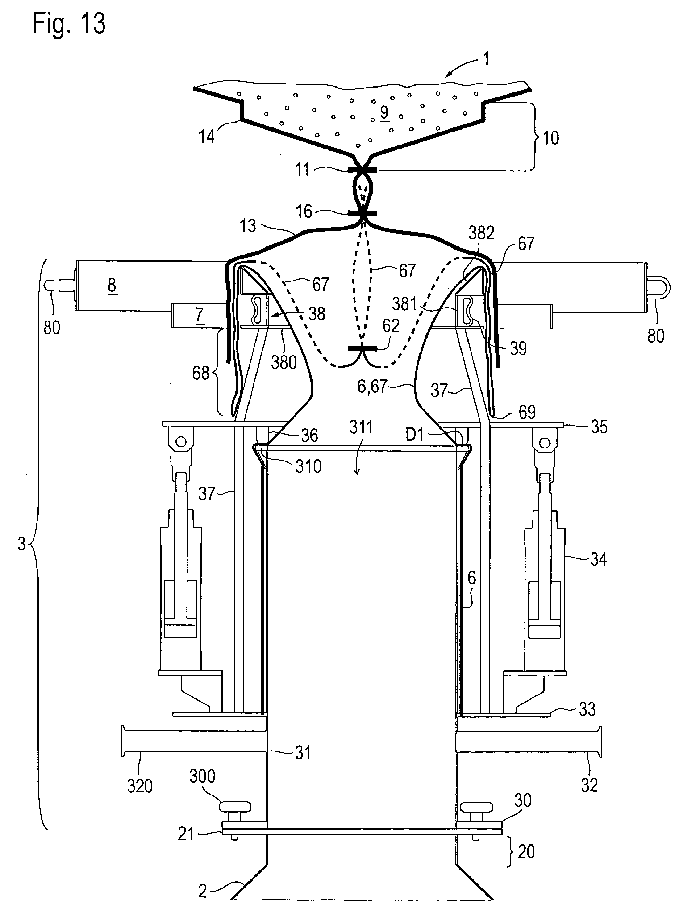

### Figur 13: Vierte Situation

Der an den zweiten Verschluss **62** der Folie **6** angrenzende Bereich des flexiblen Fortsatzes **67** wird mit dem flexiblen Fortsatz **13** der Umhüllung **14** des ersten Behälters **1**, unterhalb des ersten Verschlusses **1**, anhand eines sechsten Verschlusses **16** abgebunden.

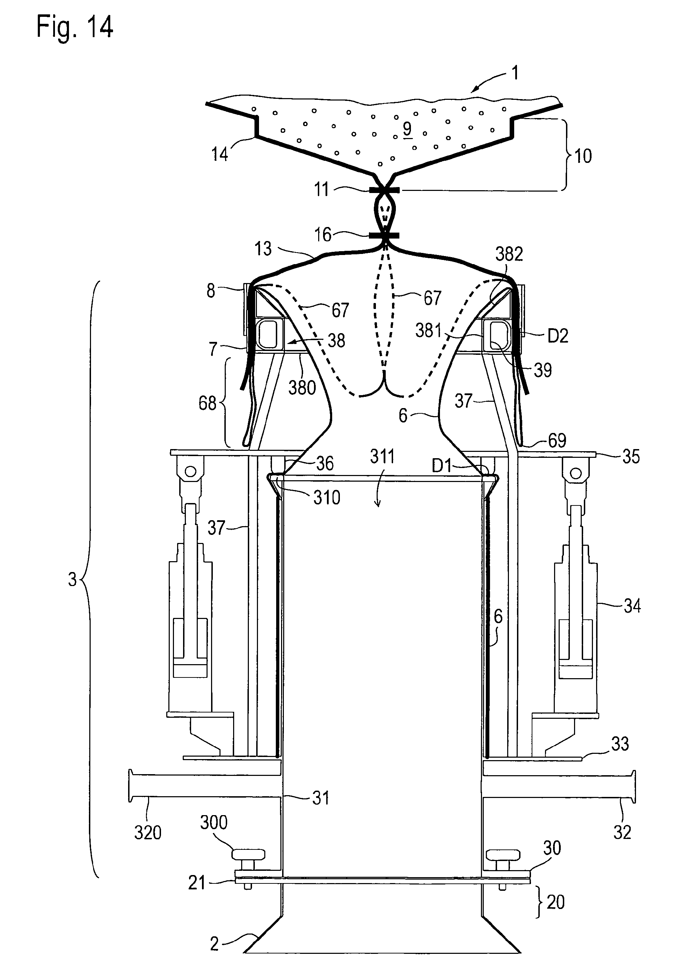

### Figur 14: Fünfte Situation

Zunächst wird der zweite Verschluss **62** am flexiblen Fortsatz **67** der Folie **6** gelöst. Um an den zweiten Verschluss **62** zu gelangen, wird man unter den flexiblen Fortsatz **13** durch den Kragen **38** greifen. Daraufhin wird das erste Spannelement **7** um die Anordnung aus flexiblem Fortsatz **13** des ersten Behälters **1**, daran anliegendem flexiblen Fortsatz **67** der Folie **6** und daran anliegender Sekundärdichtung **39** angelegt und verspannt. Ferner umschliesst man mit dem zweiten Spannelement **8** die erzeugte Anordnung aus Sekundärdichtung **39**, flexiblem Fortsatz **67** der Folie **6** und flexiblem Fortsatz **13** des ersten Behälters **1**. Dann wird die Sekundärdichtung **39** aktiviert. Es entsteht die Dichtstelle **D2**, und die flexiblen Fortsätze **13,67** sind somit fixiert. Die Verschlussorgane **80** des zweiten Spannelements **8** greifen ineinander. Das erste Spannelement **7** und die zweite Dichtstelle **D2** sind somit gesichert.

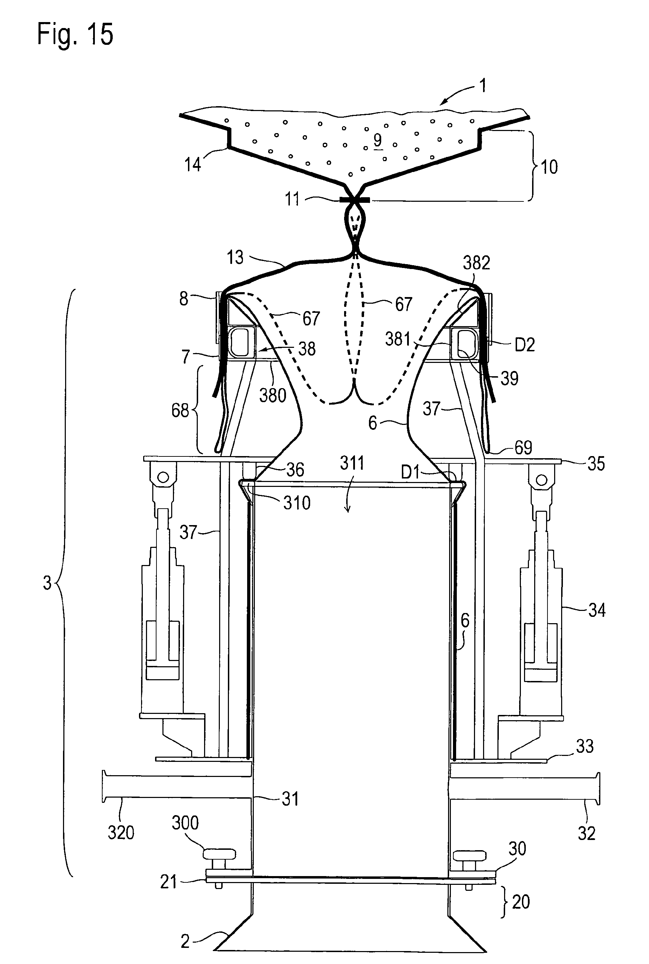

### Figur 15: Sechste Situation

Der sechste Verschluss **16** unterhalb des ersten Verschlusses **11** wird gelöst.

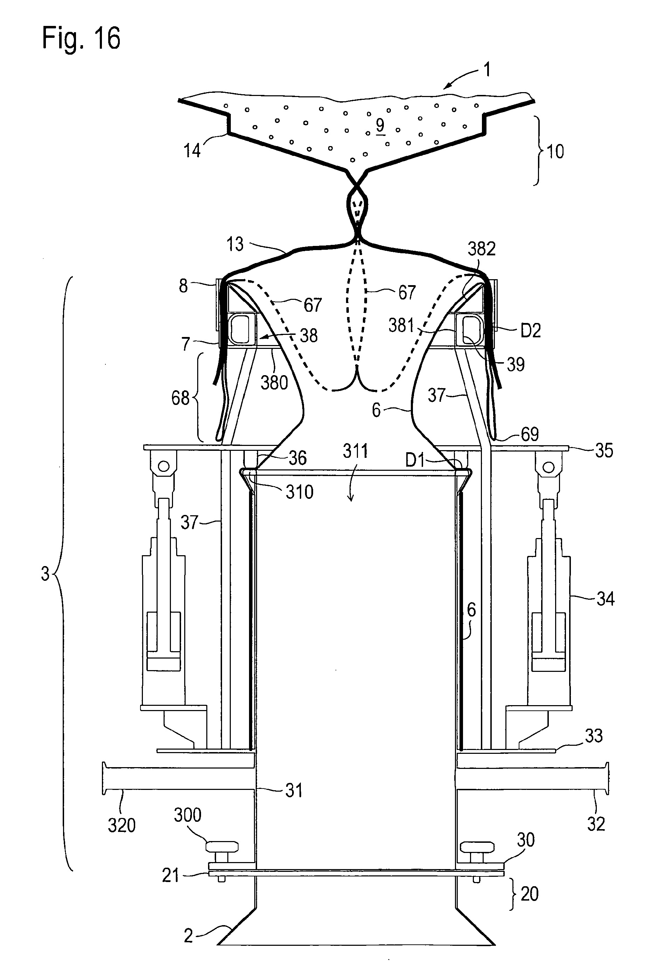

### Figur 16: Siebente Situation

Der erste Verschluss **11** am flexiblen Fortsatz **13** der Umhüllung **14** am Auslauf **10** des ersten Behälters **1** wird geöffnet.

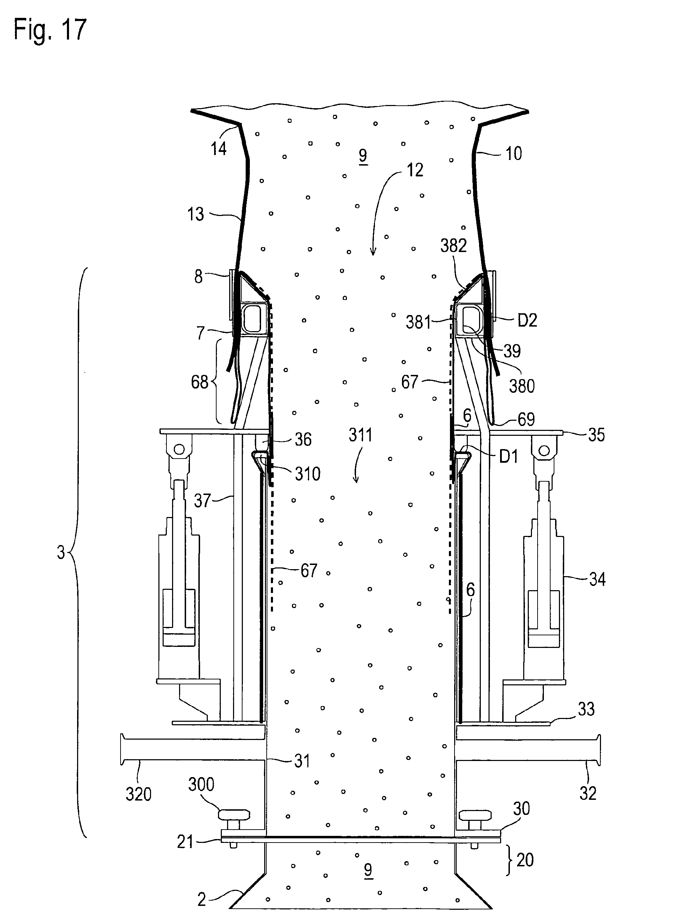

### Figur 17: Achte Situation

Mit dem Entfernen der Verschlüsse **60,62,16,11** ist der Strömungsweg **12** aus dem ersten Behälter **1** durch den Kragen **38**, die Röhre **31** in den Einlauf **20** zum zweiten Behälter **2** freigegeben. Infolge der Schwerkraft des Füllguts **9** fliesst dieses vom ersten Behälter **1** in den zweiten Behälter **2**, bis der erste Behälter **1** völlig leer ist. Die Trichterkontur **382** am Kragen **38** begünstigt dabei den Eintritt des Füllguts **9** vom Strömungsweg 1**2** in den Bereich des Kragens **38**. Der flexible Fortsatz **67** und die Folie **6** werden aufgrund des die Abfüllvorrichtung **3** durchströmenden Füllguts **9** an die Innenwandung vom Kragen **38** und der Röhre **31** gedrückt. Das zweite Spannelement **8** sichert die zweite Dichtstelle **D2** gegen den Strömungsdruck des abwärts fliessenden Füllguts **9**. Unterhalb der Schulter **310** bildet sich durch den nun gelösten zweiten Verschluss **62** und den damit entstandenen Materialüberhang an Folie **6** eine Art Tasche innerhalb der Röhre **31**.

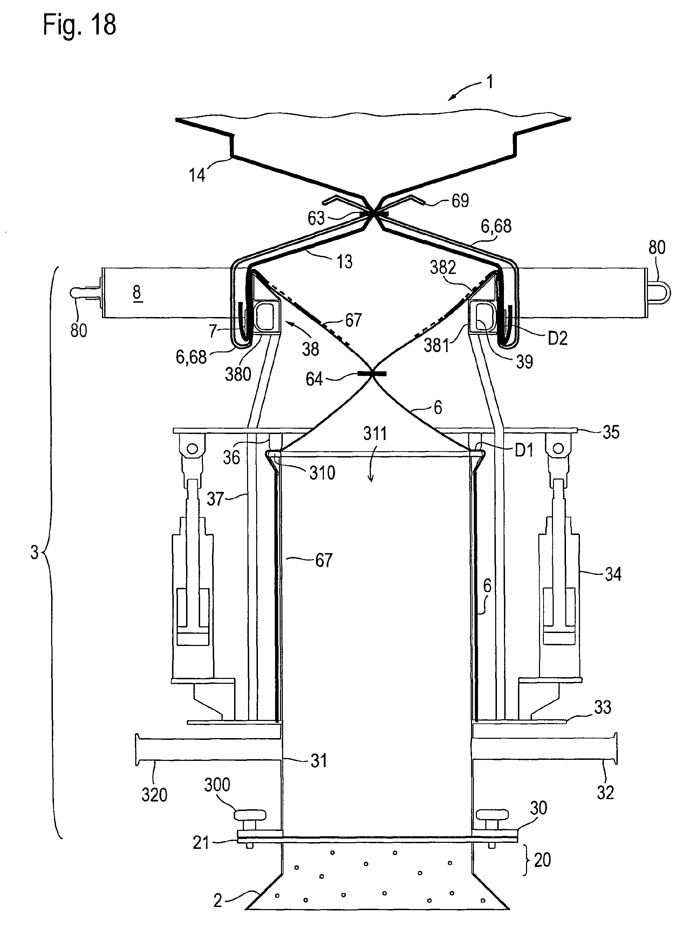

### Figur 18: Neunte Situation

Bei gelöstem, später wieder verwendbarem zweiten Spannelement **8** wird der Überhangabschnitt **68** der Folie **6** mit seinem freien Ende **69** nach oben über den Kragen **38** gestülpt und ein Bündel aus Überhangabschnitt **68** und flexiblem Fortsatz **13** des ersten Behälters **1** gebildet. An diesem Bündel wird ein dritter Verschluss **63** erzeugt. Dabei überragt das freie Ende **69** den dritten Verschluss **63**. Im Anschluss daran wird zwischen der ersten Dichtstelle **D1** und der zweiten Dichtstelle D2 an der Folie **6** ein vierter Verschluss **64** angebracht, indem man durch die Freiräume zwischen den Distanzstreben **37** greift. Hierauf folgt ein Spülgang über den zweiten Rohrstutzen **320,** um die staubbeladene Luft im Innenvolumen unterhalb des vierten Verschlusses **64** zu reinigen, d.h. durch saubere Luft zu ersetzen. Damit wird erreicht, dass dann nachgezogene Folie **6** nicht durch von im Innenvolumen vorhandenen Reststaub innerlich verunreinigt werden würde.

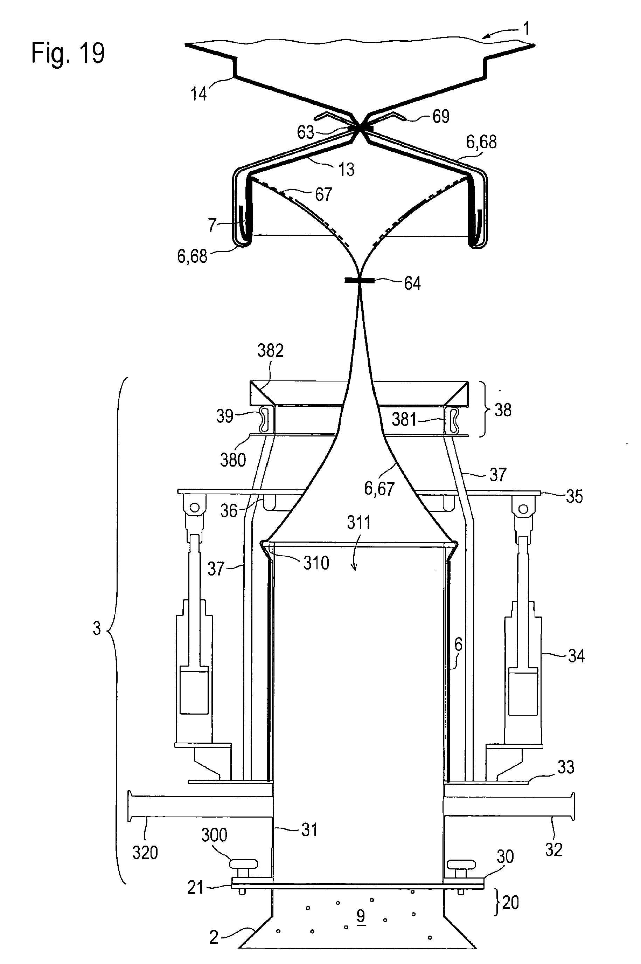

### Figur 19: Zehnte Situation

Beim Aufwärtsfahren der Hubeinrichtungen **34** entfernt sich die von der oberen Basis **35** getragene Primärdichtung **36** von der Schulter **310**, so dass die erste Dichtstelle D1 aufgelöst wird. Benötigt man eine grössere Länge an Folie **6** - wenn z.B. der flexible Fortsatz **67** der Folie **6** über den vierten Verschluss 64 hinausgeht -, erfolgt manuelles und/oder maschinelles Nachziehen bei bereits deaktivierter Sekundärdichtung **39**. Für das maschinelle Nachziehen kommt eine nicht dargestellte Zugeinrichtung in Betracht.

Alternativ kann man bei sparsamerer Verwendung von Folie **6** zur Bereitstellung eines rückstandsfreien nächsten flexiblen Fortsatzes **67** für einen nächsten Umfüllzyklus die von der Röhre **31** und der Folie **6** unterhalb des vierten Verschlusses **64** umhüllte kontaminierte Luft, welche vom vorherigen Umfüllzyklus stammt, durch eine Spülung beseitigen. Hierzu wird durch den in die Röhre **31** mündenden zweiten Rohrstutzen **320** ein Gas, vorzugsweise saubere Luft, eingeblasen, das über den von der Röhre **31** abgehenden ersten Rohrstutzen **32** abfliesst, vorzugsweise durch Absaugen gefördert.

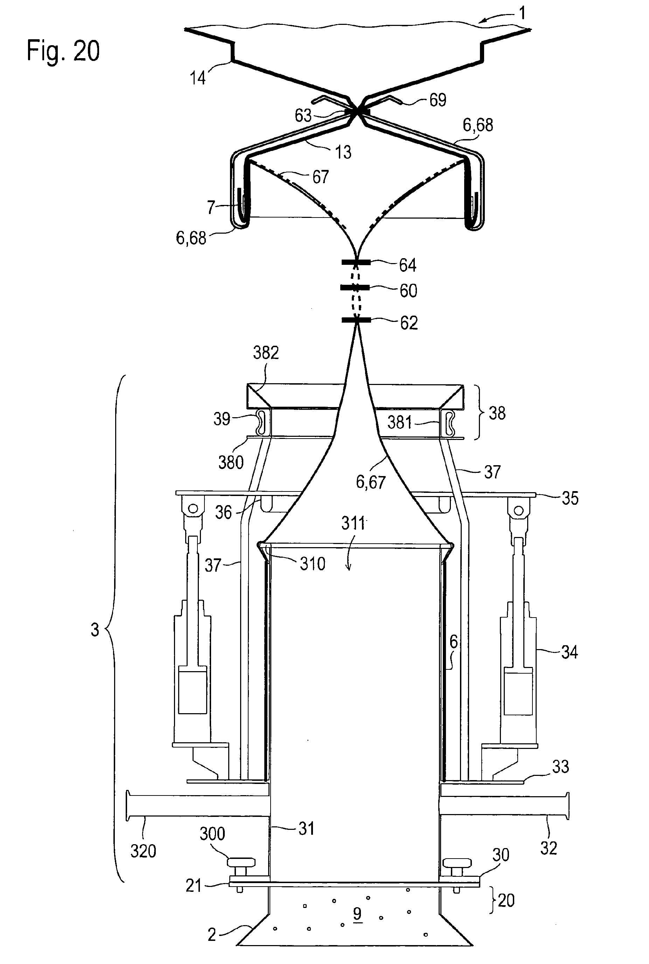

### Figur 20: Elfte Situation

Im Anschluss an das Nachziehen kann ein optionaler Zusatzverschluss **60** am erneuten flexiblen Fortsatz **67** der Folie **6** erfolgen. Bei grosszügig nachgezogener Folie **6** ist sichergestellt, dass für den nächsten Umfüllzyklus nicht kontaminierte Folie **6** ansteht. Durch den vorhandenen dritten und vierten Verschluss **63,64** bleibt das erste Spannelement **7** innerhalb des zu entsorgenden Folienabschnitts **6**. Schliesslich wird die Folie **6** auf Höhe der oberen Basis **35** mit einem zweiten Verschluss **62** abgebunden.

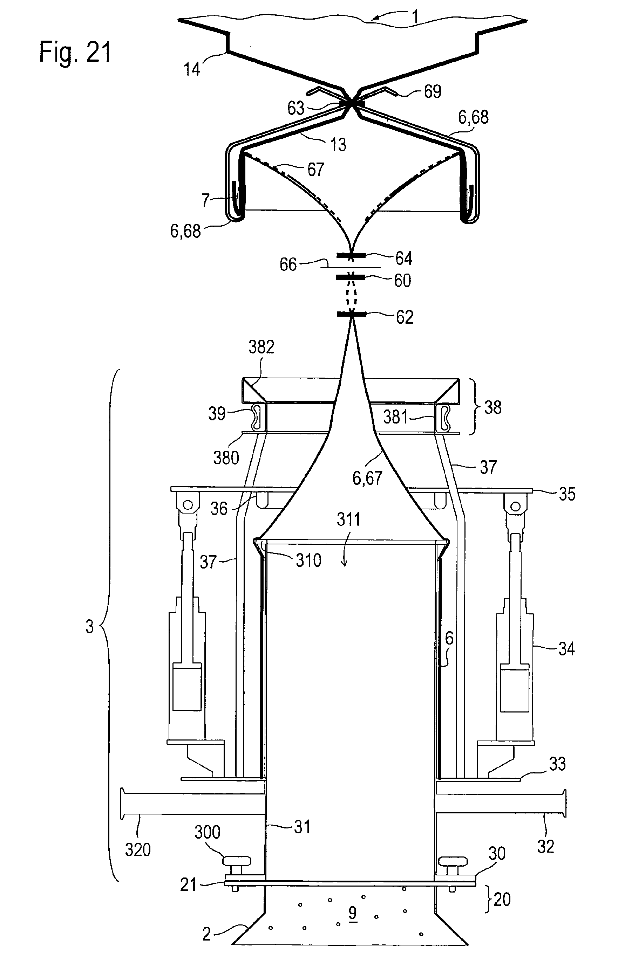

### Figur 21: Zwölfte Situation

Die Folie **6** wird zwischen dem zweiten Verschluss **62** bzw. dem optionalen Zusatzverschluss **60** und dem vierten Verschluss **64** an einer Schnittstelle **66** durchtrennt, so dass ein neuer flexibler Fortsatz **67** für den nächsten Umfüllzyklus zur Verfügung steht. Der entleerte erste Behälter **1** mit der Umhüllung **14**, dem Auslauf **10** und dem Fortsatz **13**, der am dritten Verschluss **63** mit dem Überhangabschnitt **68** des abgetrennten flexiblen Fortsatzes **67** mit dem vierten Verschluss **64** gebündelt ist und das erste Spannelement **7** umschliesst, kann entsorgt werden.

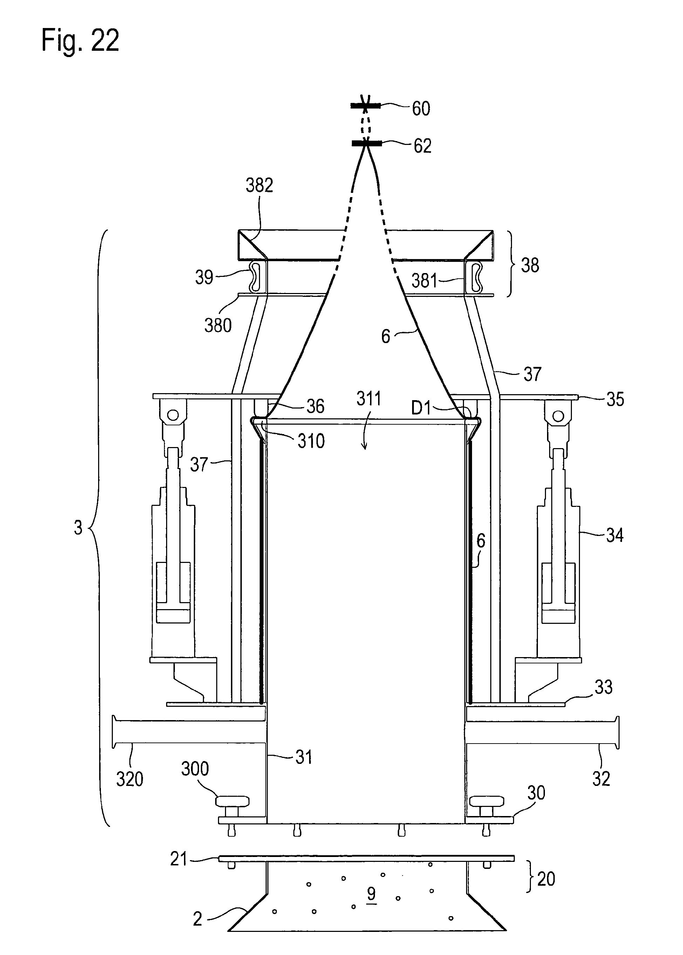

### Figur 22: Dreizehnte Situation

Nach Abwärtsbewegung sind die Hubeinrichtungen **34** eingefahren, so dass die obere Basis **35** mit der Primärdichtung **36** erneut auf der Schulter **310** aufliegt und die erste Dichtstelle **D1** wieder erzeugt ist. Die Folie **6** verläuft gemäss der ersten Situation und ist somit für den nächsten Umfüllzyklus bereitgestellt. Je nach Konzeption der Gesamtanlage könnte der zweite Behälter **2** von der Abfüllvorrichtung **3** abgedockt werden, um den zweiten Behälter **2** zu entleeren oder durch einen neuen, leeren zweiten Behälter **2** zu ersetzen.

## Patentansprüche

1. Verfahren zum kontaminationsarmen Umfüllen von Füllgut **(9)** aus einem ersten Behälter **(1)** in einen zweiten Behälter **(2),** wobei:
a) der erste Behälter **(1)** eine Umhüllung **(14)** hat, welche in einen Auslauf **(10)** mündet, der mit einem ersten Verschluss **(11)** versehen ist, und sich über den ersten Verschluss **(11)** hinaus, in Fortsetzung der Umhüllung **(14)**, ein flexibler Fortsatz **(13)** erstreckt;
b) zwischen dem ersten Behälter **(1)** und dem zweiten Behälter **(2)** eine Abfüllvorrichtung **(3)** angeordnet ist, welche eine Röhre **(31)** besitzt;
c) die Röhre **(31)** zum Durchfluss des Füllguts **(9)** beim Umfüllen aus dem ersten Behälter **(1)** in den zweiten Behälter **(2)** und auf ihrem Aussenumfang zur Bevorratung einer Folie **(6)** in Form eines Endlosliners bestimmt ist; mit folgenden Schritten:
d) Führen der Folie **(6)** über eine angrenzend an einen Eintritt **(311)** in die Röhre **(31)** liegende erste Dichtstelle **(D1)** hinaus, so dass sich von der Folie **(6)** ein flexibler Fortsatz **(67)** erstreckt, der mit einem Überhangabschnitt (**68**) an einem freien Ende **(69)** endet;
e) Anbringen eines zweiten Verschlusses **(62)** oberhalb der ersten Dichtstelle **(D1**) am flexiblen Fortsatz **(67)**;
f) Zusammenfassen des flexiblen Fortsatzes **(13)** der Umhüllung **(14)** und des flexiblen Fortsatzes **(67)** der Folie **(6)** an einer zwischen dem ersten Verschluss **(11)** und dem zweiten Verschluss **(62)** liegenden zweiten Dichtstelle **(D2)**, zu der eine aktivierbare Sekundärdichtung **(39)** gehört, mittels eines ersten Spannelements **(7);**
g) Lösen des zweiten Verschlusses **(62)** und des ersten Verschlusses **(11)**, wodurch das Füllgut **(9)** aus dem ersten Behälter **(1)** durch die Röhre **(31)** in den zweiten Behälter **(2)** fliesst;
h) Zusammenfassen des Überhangabschnitts **(68)** mit dem flexiblen Fortsatz **(13)** der Umhüllung **(14)** in einem dritten Verschluss **(63)** oberhalb der zweiten Dichtstelle **(D2);**
i) Zusammenfassen des flexiblen Fortsatzes **(67)** der Folie **(6)** in einem vierten Verschluss (**64**) zwischen der ersten Dichtstelle **(D1)** und dem dritten Verschluss **(63)** sowie Lösen zumindest der ersten Dichtstelle (**D1**);
j) Nachführen von Folie **(6)** in Richtung des ersten Behälters **(1)** zur Bildung eines nächsten flexiblen Fortsatzes **(67)** für einen nächsten Umfüllzyklus;
k) Zusammenfassen der Folie **(6)** am nächsten flexiblen Fortsatz **(67)** in einem nächsten zweiten Verschluss **(62)**; und
l) Durchtrennen des flexiblen Fortsatzes **(67)** an einer Schnittstelle **(66)** zwischen dem nächsten zweiten Verschluss **(62**) und dem vierten Verschluss **(64)** sowie Entfernen des entleerten ersten Behälters **(1)** mit dem Anhang **(13,67,7)** bis zur Schnittstelle **(66)** bei gelöster zweiter Dichtstelle (**D2), dadurch gekennzeichnet, dass**
m) die zweite Dichtstelle **(D2)** aus einer Anordnung mit der aktivierten Sekundärdichtung **(39)**, dem über den Aussenumfang der Sekundärdichtung **(39)** geführten flexiblen Fortsatz **(67)** der Folie **(6)**, dem im Bereich der Sekundärdichtung **(39)** äusserlich über den flexiblen Fortsatz **(67)** der Folie **(6)** geführten flexiblen Fortsatz **(13)** der Umhüllung **(14)** und dem im Bereich der Sekundärdichtung **(39)** äusserlich über den flexiblen Fortsatz **(13)** aufgebrachten ersten Spannelement **(7)** gebildet wird.

2. Verfahren nach Anspruch 1, **dadurch gekennzeichnet, dass**
a) die erste Dichtstelle **(D1)** aus einer Anordnung mit einer Ringschulter **(310)** am Eintritt **(311)** in die Röhre **(31)**, der über die Ringschulter **(310)** geführten Folie **(6)** und einer im Bereich der Ringschulter **(310)** auf die darüber geführte Folie **(6)** temporär aufdrückenden Primärdichtung **(36)** gebildet wird; und
b) das Aktivieren und Lösen der ersten Dichtstelle **(D1)** mittels Hubeinrichtungen **(34)** erfolgt, die sich an einer feststehenden unteren Basis **(33)** abstützen und an einer in der Horizontalebene beweglichen oberen Basis **(35)** angreifen, welche die Primärdichtung **(36)** trägt.

3. Verfahren nach zumindest einem der Ansprüche 1 und 2, **dadurch gekennzeichnet, dass**
a) das Nachführen von Folie **(6)** in Richtung des ersten Behälters **(1)** zur Bildung eines nächsten flexiblen Fortsatzes **(67)** für einen nächsten Umfüllzyklus bei gelöster erster Dichtstelle **(D1)** und gelöster zweiter Dichtstelle **(D2)** manuell und/oder mittels einer Zugeinrichtung erfolgt; wobei
b) sich von der oberen Basis **(35)** Distanzstreben **(37)** erstrecken, die einen im Prinzip hohlen zylindrischen Kragen **(38)** tragen, an dem die zweite Dichtstelle **(D2)** erzeugbar ist.

4. Verfahren nach zumindest einem der Ansprüche 1 bis 3, **dadurch gekennzeichnet, dass**
a) an der nachgeführten Folie **(6)** eines nächsten flexiblen Fortsatzes **(67)** für einen nächsten Umfüllzyklus zwischen dem zweiten Verschluss **(62)** und dem vierten Verschluss **(64)** ein Zusatzverschluss **(60)** angebracht wird; und
b) die Schnittstelle **(66)** zwischen dem vierten Verschluss **(64)** und dem Zusatzverschluss **(60)** ausgeführt wird.

5. Verfahren nach zumindest einem der Ansprüche 1 bis 4, **dadurch gekennzeichnet, dass**
a) der flexible Fortsatz **(67)** der Folie **(6)** von der ersten Dichtstelle **(D1)** über die zweite Dichtstelle **(D2)** zurück geschlauft an den zweiten Verschluss **(62)** und **dadurch** doppelwandig taschenförmig am Kragen **(38)** herunterhängend geführt wird;
b) nach Lösen des Zusatzverschlusses **(60)** das freie Ende des flexiblen Fortsatzes **(67)** in einem sechsten Verschluss **(16)** im flexiblen Fortsatz **(13)** der Umhüllung **(14)** gefasst wird, wobei der sechste Verschluss **(16)** zwischen dem ersten Verschluss **(11)** und dem Kragen **(38)** positioniert wird;
c) anschliessend der zweite Verschluss **(62)** geöffnet und hiernach die zweite Dichtstelle **(D2)** aktiviert wird; und
d) zur Einleitung des Umfüllvorgangs zunächst der sechste Verschluss **(16)** und dann der erste Verschluss **(11)** geöffnet werden.

6. Verfahren nach zumindest einem der Ansprüche 1 bis 4, **dadurch gekennzeichnet, dass**
a) an der nachgeführten Folie **(6)** eines nächsten flexiblen Fortsatzes **(67)** für einen nächsten Umfüllzyklus zwischen dem zweiten Verschluss **(62)** und dem vierten Verschluss **(64)** ein dem zweiten Verschluss **(62)** zugewandter fünfter Verschluss **(65)** sowie ein dem vierten Verschluss **(64)** zugewandter Zusatzverschluss **(60)** angebracht wird; und
b) die Schnittstelle **(66)** zwischen dem fünften Verschluss **(65)** und dem Zusatzverschluss (**60)** ausgeführt wird.

7. Verfahren nach zumindest einem der Ansprüche 1 bis 6, **dadurch gekennzeichnet, dass**
a) die zweite Dichtstelle **(D2)** durch temporäres Aufblähen der am Kragen **(38)** angeordneten Sekundärdichtung **(39)** aktiviert wird; und
b) das an der zweiten Dichtstelle **(D2)** aufgebrachte erste Spannelement **(7)** vor Aktivierung der Sekundärdichtung **(39)** durch ein äusserlich darum geschlungenes, erneut verwendbares zweites Spannelement **(8)** gesichert wird.

8. Verfahren nach zumindest einem der Ansprüche 1 bis 7, **dadurch gekennzeichnet, dass**
a) zur Bereitstellung eines rückstandsfreien nächsten flexiblen Fortsatzes **(67)** für einen nächsten Umfüllzyklus die von der Röhre **(31)** und der Folie **(6)** unterhalb des vierten Verschlusses **(64)** umhüllte kontaminierte Luft, welche vom vorherigen Umfüllzyklus stammt, durch eine Spülung beseitigt wird; wobei
b) durch einen in die Röhre **(31)** mündenden zweiten Rohrstutzen **(320)** ein Gas, vorzugsweise saubere Luft, eingeblasen wird, das über einen von der Röhre **(31)** abgehenden ersten Rohrstutzen **(32)** abfliesst, vorzugsweise abgesaugt wird.

9. Vorrichtung zur Durchführung des Verfahrens nach zumindest einem der Ansprüche 1 bis 8 zum Umfüllen von Füllgut **(9)** aus einem ersten Behälter **(1)** in einen zweiten Behälter **(2)**, wobei:
a) der erste Behälter **(1)** eine Umhüllung **(14)** hat, welche in einen Auslauf **(10)** mündet, der anfänglich mit einem ersten Verschluss **(11)** versehen, dazu bestimmt ist, beim Umfüllen des Füllguts **(9)** aus dem ersten Behälter **(1)** in den zweiten Behälter **(2)** gelöst zu werden, und sich über den ersten Verschluss **(11)** hinaus, in Fortsetzung der Umhüllung **(14),** ein flexibler Fortsatz **(13)** erstreckt;
b) zwischen dem ersten Behälter **(1)** und dem zweiten Behälter **(2)** eine Abfüllvorrichtung **(3)** angeordnet ist, welche eine Röhre **(31)** besitzt;
c) die Röhre **(31)** zum Durchfluss des Füllguts **(9)** beim Umfüllen aus dem ersten Behälter **(1)** in den zweiten Behälter (**2**) bestimmt ist und auf ihrem Aussenumfang eine Folie **(6)** in Form eines Endlosliners trägt;
d) die Folie **(6)** über eine angrenzend an einen Eintritt **(311)** in die Röhre **(31)** liegende, temporär aktivierte erste Dichtstelle (**D1**) bis zu einem temporären zweiten Verschluss **(62)** geführt ist;
e) sich die Folie **(6)** über den zweiten Verschluss **(62)** hinaus als ein flexibler Fortsatz **(67)** erstreckt, der mit einem Überhangabschnitt **(68)** an einem freien Ende (**69)** endet;
f) der zweite Verschluss **(62),** welcher am flexiblen Fortsatz **(67)** liegt, dazu bestimmt ist, beim Umfüllen des Füllguts **(9)** aus dem ersten Behälter **(1)** durch die Röhre **(31)** in den zweiten Behälter **(2**) gelöst zu werden;
g) der flexible Fortsatz **(13)** der Umhüllung **(14)** und der flexible Fortsatz **(67)** der Folie **(6)** dazu bestimmt sind, temporär an einer zwischen dem ersten Verschluss **(11)** und dem zweiten Verschluss **(62)** liegenden zweiten Dichtstelle **(D2),** zu der eine aktivierbare Dichtung **(39)** gehört, mittels eines ersten Spannelements **(7)** miteinander gefasst zu werden;
h) der Überhangabschnitt **(68)** dazu bestimmt ist, nach dem Umfüllen des Füllguts **(9)** aus dem ersten Behälter **(1)** in den zweiten Behälter **(2)** temporär in einem dritten Verschluss (63) oberhalb der zweiten Dichtstelle **(D2)** zusammengefasst zu werden;
i) bei gelöster erster Dichtstelle (**D1**) sich Folie (**6**) in Richtung des ersten Behälters **(1)** zur Bildung eines nächsten flexiblen Fortsatzes **(67)** für einen nächsten Umfüllzyklus nachführen lässt und dieser nächste flexible Fortsatz **(67)** der Folie **(6)** ferner dazu bestimmt ist, temporär in einem vierten Verschluss **(64)** zwischen der gelösten ersten Dichtstelle (**D1**) und dem dritten Verschluss **(63)** zusammengefasst zu werden;
j) am nächsten flexiblen Fortsatz **(67)** die Folie **(6)** temporär in einem nächsten zweiten Verschluss **(62)** zusammengefasst ist;
k) eine Schnittstelle **(66)** zwischen dem nächsten zweiten Verschluss **(62)** und dem vierten Verschluss **(64)** vorgesehen ist, welche zum Durchtrennen des flexiblen Fortsatzes **(67)** bestimmt ist, wonach sich der entleerte erste Behälter **(1)** mit dem Anhang **(13,67,7)** bis zur Schnittstelle **(66)** bei gelöster zweiter Dichtstelle **(D2)** entfernen lässt, **dadurch gekennzeichnet, dass**
l) die zweite Dichtstelle (**D2)** aus einer Anordnung mit der aktivierten Dichtung **(39)**, dem über den Aussenumfang der Sekundärdichtung **(39)** geführten flexiblen Fortsatz **(67)** der Folie **(6),** dem im Bereich der Sekundärdichtung **(39)** äusserlich über den flexiblen Fortsatz **(67)** der Folie **(6)** geführten flexiblen Fortsatz **(13)** der Umhüllung **(14)** und dem im Bereich der Sekundärdichtung **(39)** äusserlich über den flexiblen Fortsatz **(13)** aufgebrachten ersten Spannelement **(7)** besteht.

10. Vorrichtung nach Anspruch 9, **dadurch gekennzeichnet, dass**
a) die erste Dichtstelle **(D1)** aus einer Anordnung mit einer Ringschulter **(310)** am Eintritt **(311)** in die Röhre **(31),** der über die Ringschulter **(310)** geführten Folie **(6)** und einer im Bereich der Ringschulter **(310)** auf die darüber geführte Folie **(6)** temporär aufdrückenden Primärdichtung **(36)** gebildet ist; und
b) zum Aktivieren und Lösen der ersten Dichtstelle **(D1)** Hubeinrichtungen **(34)** vorgesehen sind, die sich an einer feststehenden unteren Basis **(33)** abstützen und an einer in der Horizontalebene beweglichen oberen Basis **(35)** angreifen, welche die Primärdichtung **(36)** trägt.

11. Vorrichtung nach zumindest einem der Ansprüche 9 und 10, **dadurch gekennzeichnet, dass**
a) zum Nachführen von Folie **(6)** in Richtung des ersten Behälters **(1)** zur Bildung eines nächsten flexiblen Fortsatzes **(67)** für einen nächsten Umfüllzyklus bei gelöster erster Dichtstelle **(D1**) und gelöster zweiter Dichtstelle (**D2**) die Hubeinrichtungen **(34)** ausgefahren sind und sich dabei Folie **(6)** manuell und/oder mittels einer Zugeinrichtung nachführen lässt; wobei
b) sich von der oberen Basis **(35)** Distanzstreben **(37)** erstrecken, die einen im Prinzip hohlen zylindrischen Kragen **(38)** tragen, an dem sich die zweite Dichtstelle (**D2**) bilden lässt.

12. Vorrichtung nach zumindest einem der Ansprüche 9 bis 11, **dadurch gekennzeichnet, dass**
a) an der nachgeführten Folie **(6)** eines nächsten flexiblen Fortsatzes **(67)** für einen nächsten Umfüllzyklus zwischen dem zweiten Verschluss **(62)** und dem vierten Verschluss **(64)** ein Zusatzverschluss **(60)** angebracht ist; und
b) die Schnittstelle **(66)** zwischen dem vierten Verschluss **(64)** und dem Zusatzverschluss **(60)** vorgesehen ist.

13. Vorrichtung nach zumindest einem der Ansprüche 9 bis 12, **dadurch gekennzeichnet, dass**
a) der flexible Fortsatz **(67)** der Folie **(6)** von der ersten Dichtstelle (**D1**) über die zweite Dichtstelle **(D2)** zurück geschlauft an den zweiten Verschluss **(62)** und **dadurch** doppelwandig taschenförmig am Kragen **(38)** herunterhängend geführt ist;
b) nach Lösen des Zusatzverschlusses **(60)** das freie Ende des flexiblen Fortsatzes **(67)** in einem sechsten Verschluss **(16)** im flexiblen Fortsatz **(13)** der Umhüllung **(14)** gefasst ist, wobei der sechste Verschluss **(16)** zwischen dem ersten Verschluss **(11)** und dem Kragen **(38)** vorgesehen ist;
c) anschliessend der zweite Verschluss **(62)** geöffnet ist und hiernach die zweite Dichtstelle **(D2)** aktiviert ist; und
d) bei Einleitung des Umfüllvorgangs zunächst der sechste Verschluss **(16)** und dann der erste Verschluss **(11)** geöffnet sind.

14. Vorrichtung nach zumindest einem der Ansprüche 9 bis 13, **dadurch gekennzeichnet, dass**
a) an der nachgeführten Folie **(6)** eines nächsten flexiblen Fortsatzes **(67)** für einen nächsten Umfüllzyklus zwischen dem zweiten Verschluss **(62)** und dem vierten Verschluss **(64)** ein dem zweiten Verschluss **(62)** zugewandter fünfter Verschluss **(65)** sowie ein dem vierten Verschluss **(64)** zugewandter Zusatzverschluss **(60)** angebracht ist; und
b) die Schnittstelle **(66)** zwischen dem fünften Verschluss **(65)** und dem Zusatzverschluss **(60)** vorgesehen ist.

15. Vorrichtung nach zumindest einem der Ansprüche 9 bis 14, **dadurch gekennzeichnet, dass**
a) die zweite Dichtstelle **(D2)** sich durch temporäres Aufblähen der am Kragen **(38)** angeordneten Sekundärdichtung **(39)** aktivieren lässt; und
b) das an der zweiten Dichtstelle **(D2)** aufgebrachte erste Spannelement **(7)** vor Aktivierung der Sekundärdichtung **(39)** durch ein äusserlich darum geschlungenes, erneut verwendbares zweites Spannelement **(8)** gesichert ist.

16. Vorrichtung nach zumindest einem der Ansprüche 9 bis 15, **dadurch gekennzeichnet, dass**
a) ein in die Röhre **(31)** mündender zweiter Rohrstutzen **(320)** zum Einblasen eines Spülgases, vorzugsweise saubere Luft, vorgesehen ist, und von der Röhre **(31)** ein erster Rohrstutzen **(32)** zum Ableiten des Spülgases abgeht; und damit
b) die von der Röhre **(31)** und der Folie **(6)** unterhalb des vierten Verschlusses (64) umhüllte kontaminierte Luft, welche vom vorherigen Umfüllzyklus stammt, beseitigt ist, so dass ein rückstandsfreier nächster flexibler Fortsatz **(67)** für einen nächsten Umfüllzyklus zur Verfügung steht.
